(19) **Europäisches Patentamt**
**European Patent Office**
**Office européen des brevets**

(11) **EP 4 734 643 A1**

(12) **EUROPEAN PATENT APPLICATION**
published in accordance with Art. 153(4) EPC

(43) Date of publication:
**29.04.2026 Bulletin 2026/18**

(21) Application number: **23942727.1**

(22) Date of filing: **26.06.2023**

(51) International Patent Classification (IPC):
**H04W 72/25** (2023.01)

(52) Cooperative Patent Classification (CPC):
**H04W 72/0453; H04W 72/25; H04W 72/40**

(86) International application number:
**PCT/CN2023/102489**

(87) International publication number:
**WO 2025/000199 (02.01.2025 Gazette 2025/01)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Quectel Wireless Solutions Co., Ltd.
Shanghai 201601 (CN)**

(72) Inventors:
• **LYU, Ling
  Shanghai 201601 (CN)**
• **ZHAO, Zheng
  Shanghai 201601 (CN)**
• **YANG, Zhongzhi
  Shanghai 201601 (CN)**

(74) Representative: **Fish & Richardson P.C.
Highlight Business Towers
Mies-van-der-Rohe-Straße 8
80807 München (DE)**

(54) **METHOD AND APPARATUS FOR SIDELINK COMMUNICATION**

(57) The present disclosure provides a method and apparatus for sidelink communication, which helps two or more terminal devices in a sidelink communication system to perform initial beam pairing based on the sidelink. The method includes: sending, by a first terminal device, a first sidelink-synchronization signal block (S-SSB) through one or more transmit beams, where the first S-SSB is used to carry first information, and the first information is used for one or more terminal devices other than the first terminal device to determine whether to perform initial beam pairing with the first terminal device.

The first terminal device sends a first S-SSB via one or more transmit beams — S510

FIG. 5

**Description**

**TECHNICAL FIELD**

The present disclosure relates to the field of communication technology, and more specifically to a method and apparatus for sidelink communication.

**BACKGROUND**

When communicating in higher frequency bands (e.g., millimeter wave bands), a network device can achieve system coverage through beam sweeping based on large-scale antenna arrays. Beam sweeping requires certain spatiotemporal resources and has a relatively high-power consumption. Therefore, the network device and a terminal device determine an optimal transmit and receive beam pair through beam pairing for uplink/downlink transmission.

In sidelink communication systems, how the terminal device performs beam pairing based on the sidelink is a problem that needs to be addressed.

**SUMMARY**

The present disclosure provides a method and apparatus for sidelink communication. The following describes various aspects involved in the embodiments of the present disclosure.

According to a first aspect, a method for sidelink communication is provided, including: sending, by a first terminal device, a first sidelink-synchronization signal block (S-SSB) through one or more transmit beams, where the first S-SSB is used to carry first information, and the first information is used for one or more terminal devices other than the first terminal device to determine whether to perform initial beam pairing with the first terminal device.

According to a second aspect, a method for sidelink communication is provided, including: receiving, by a second terminal device, a first sidelink-synchronization signal block (S-SSB) sent by a first terminal device through one or more transmit beams, where the first S-SSB is used to carry first information, and the first information is used for one or more terminal devices other than the first terminal device to determine whether to perform initial beam pairing with the first terminal device.

According to a third aspect, an apparatus for sidelink communication is provided, where the apparatus is a first terminal device, and the first terminal device includes: a sending unit, configured to send a first sidelink-synchronization signal block (S-SSB) through one or more transmit beams, where the first S-SSB is used to carry first information, and the first information is used for one or more terminal devices other than the first terminal device to determine whether to perform initial beam pairing with the first terminal device.

According to a fourth aspect, an apparatus for sidelink communication is provided, where the apparatus is a second terminal device, and the second terminal device includes: a receiving unit, configured to receive a first sidelink-synchronization signal block (S-SSB) sent by a first terminal device through one or more transmit beams, where the first S-SSB is used to carry first information, and the first information is used for one or more terminal devices other than the first terminal device to determine whether to perform initial beam pairing with the first terminal device.

According to a fifth aspect, an apparatus for communication is provided, including a memory and a processor, where the memory is configured to store a program, and the processor is configured to invoke the program in the memory to perform the method according to the first aspect or the second aspect.

According to a sixth aspect, an apparatus for communication is provided, including a processor, where the processor is configured to invoke a program from a memory to perform the method according to the first aspect or the second aspect.

According to a seventh aspect, a chip is provided, including a processor, where the processor is configured to invoke a program from a memory to cause a device installed with the chip to perform the method according to the first aspect or the second aspect.

According to an eighth aspect, a computer-readable storage medium storing a program is provided, where the program causes a computer to perform the method according to the first aspect or the second aspect.

According to a ninth aspect, a computer program product is provided, including a program, where the program causes a computer to perform the method according to the first aspect or the second aspect.

According to a tenth aspect, a computer program is provided, where the computer program causes a computer to perform the method according to the first aspect or the second aspect.

In the embodiments of the present disclosure, the first terminal device sends the first S-SSB through one or more transmit beams. For the terminal device that receives the first S-SSB, the first information carried in the first S-SSB indicates whether the terminal device is the target terminal device that the first terminal device needs to communicate with, thereby determining whether to perform initial beam pairing with the first terminal device. It is seen that the terminal device determines whether to perform the beam pairing based on the first information in the first S-SSB, which reduces the power consumption and resource usage of the terminal device during beam sweeping.

## BRIEF DESCRIPTION OF THE DRAWINGS

FIG. 1 is a wireless communication system applied in an embodiment of the present disclosure.

FIG 2 is a communication example diagram of NR-V2X.

FIG 3 is a schematic diagram of a sending terminal and a receiving terminal performing beam sweeping separately.

FIG 4 is a schematic diagram of beam sweeping for a plurality of sending terminal devices corresponding to a single receiving terminal device.

FIG 5 is a flowchart of a method for sidelink communication provided in an embodiment of the present disclosure.

FIG 6 is a schematic diagram of a possible implementation of the method shown in FIG 5.

FIG 7 is a schematic diagram of resource sensing performed by a terminal device in a unicast link.

FIG 8 is a flowchart of a possible implementation of beam pairing based on beam response signals.

FIG 9 is a schematic structural diagram of a timeslot carrying beam response signals in FIG 8.

FIG 10 is another schematic structural diagram of a timeslot carrying beam response signals in FIG 8.

FIG 11 is a schematic structural diagram of an apparatus for sidelink communication provided in an embodiment of the present disclosure.

FIG 12 is another schematic structural diagram of an apparatus for sidelink communication provided in an embodiment of the present disclosure.

FIG 13 is a schematic structural diagram of an apparatus for communication provided in an embodiment of the present disclosure.

## DETAILED DESCRIPTION OF THE EMBODIMENTS

The following describes technical solutions in the embodiments of the present disclosure with reference to the accompanying drawings in the embodiments of the present disclosure. Apparently, the described embodiments are part of but not all of the embodiments of the present disclosure. For the embodiments of the present disclosure, all other embodiments obtained by a person of ordinary skill in the art based on the embodiments of the present disclosure without creative efforts shall fall within the protection scope of the present disclosure.

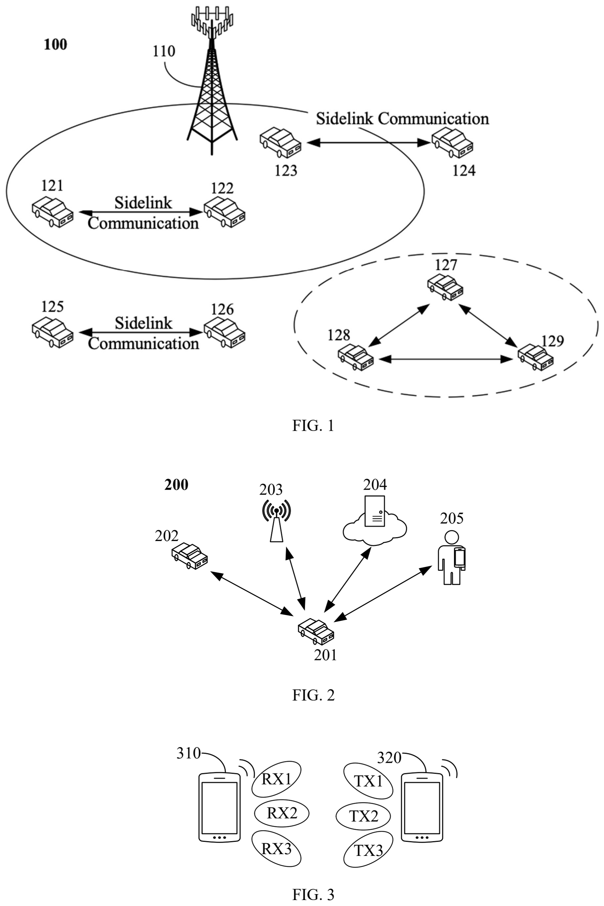

FIG. 1 is a system architecture example diagram of a wireless communication system 100 applicable to the embodiments of the present disclosure. The wireless communication system 100 may include a network device 110 and terminal devices 121 to 129. The network device 110 may provide communication coverage for a specific geographical area and may communicate with terminals located within this coverage area.

In some implementations, terminal devices may communicate with each other via a sidelink (SL). Sidelink communication may also be referred to as proximity service (ProSe) communication, unilateral communication, sidechain communication, device-to-device (D2D) communication, etc.

In other words, sidelink data may be transmitted between terminal devices through the sidelink. The sidelink data may include data and/or control signaling. In some implementations, sidelink data may include, for example, physical sidelink control channel (PSCCH), physical sidelink shared channel (PSSCH), PSCCH demodulation reference signal (DMRS), PSSCH DMRS, physical sidelink feedback channel (PSFCH), etc.

The following introduces several common sidelink communication scenarios in conjunction with FIG. 1. In sidelink communication, three scenarios may be identified based on whether the terminal devices in the sidelink are within the coverage area of the network device. Scenario 1: terminal devices communicate via sidelink while being within the coverage area of the network device. Scenario 2: some terminal devices communicate via sidelink while being within the coverage area of the network device. Scenario 3: terminal devices communicate via sidelink while being outside the coverage area of the network device.

As shown in FIG. 1, in Scenario 1, terminal devices 121 and 122 may communicate via sidelink, and both terminal devices 121 and 122 are within the coverage area of network device 110, or in other words, terminal devices 121 and 122 are both within the coverage area of the same network device 110. In this scenario, the network device 110 may send configuration signaling to terminal devices 121 and 122, and correspondingly, terminal devices 121 and 122 may communicate via the sidelink based on the configuration signaling.

As shown in FIG. 1, in Scenario 2, terminal devices 123 and 124 may communicate via sidelink, with the terminal device 123 being within the coverage area of the network device 110 and the terminal device 124 being outside the coverage area of the network device 110. In this scenario, the terminal device 123 receives configuration information from the network device 110 and communicates via the sidelink based on the configuration of the configuration signaling. However, for the terminal device 124, since it is located outside the coverage area of the network device 110, it cannot receive configuration information of the network device 110. At this time, the terminal device 124 may obtain the configuration for sidelink communication based on pre-configuration information and/or configuration information sent by the terminal device 123 within the coverage area, in order to communicate with the terminal device 123 via the sidelink based on the obtained configuration.

In some cases, the terminal device 123 may send the above configuration information to the terminal device 124 via a physical sidelink broadcast channel (PSBCH) to configure the terminal device 124 to communicate via the sidelink.

As shown in FIG. 1, in Scenario 3, terminal devices 125 to 129 are all located outside the coverage area of the network device 110 and cannot communicate with the network device 110. In this case, the terminal devices may communicate via sidelink based on pre-configuration information.

In some cases, terminal devices 127 to 129, which are outside the coverage area of network device, may form a communication group, where the terminal devices 127 to 129 within the communication group may communicate with each other. Additionally, the terminal device 127 within the communication group may act as a central control node, also referred to as a cluster header (CH), and correspondingly, the other terminal devices within the communication group may be referred to as "group members."

As the CH, the terminal device 127 may have one or more of the following functions: being responsible for establishing the communication group; managing the joining and leaving of group members; conducting resource coordination, allocating sidelink transmission resources to group members, and receiving sidelink feedback information from group members; coordinating resources with other communication groups, etc.

It should be noted that FIG. 1 exemplarily shows a network device and a plurality of terminal devices. Optionally, the wireless communication system 100 may include a plurality of network devices, and the coverage area of each network device may include other numbers of terminal devices, which is not limited in the embodiments of the present disclosure.

Optionally, the wireless communication system 100 may further include another network entity such as a network controller, a mobility management entity, etc., which is not limited in the embodiments of the present disclosure.

It should be understood that the technical solutions in the embodiments of the present disclosure may be applied to various communication systems, for example, a 5th generation (5G) or new radio (NR) system, a long term evolution (LTE) system, an LTE frequency division duplex (FDD) system, an LTE time division duplex (TDD) system, and the like. The technical solutions provided in the present disclosure may further be applied to a future communication system such as a sixth-generation mobile communication system, a satellite communication system, or the like.

The terminal device in the embodiments of the present disclosure may also be referred to as user equipment (UE), an access terminal, a subscriber unit, a subscriber station, a mobile station (MS), a mobile terminal (MT), a remote station, a remote terminal, a mobile device, a user terminal, a wireless communication device, a user agent, or a user device. The terminal device in the embodiments of the present disclosure may be a device that provides voice and/or data connectivity to a user, and may be used to connect a person, an object, and a machine, for example, a handheld device or a vehicle-mounted device having a wireless connection function. The terminal device in the embodiments of the present disclosure may be a mobile phone, a pad, a notebook computer, a palmtop computer, a mobile internet device (MID), a wearable device, a vehicle, a wireless terminal in industrial control, a wireless terminal in self-driving, a wireless terminal in a remote medical surgery, a wireless terminal in a smart grid, a wireless terminal in transportation safety, a wireless terminal in a smart city, a wireless terminal in smart home, etc. Optionally, the terminal device may serve as a base station. For example, the terminal device may serve as a scheduling entity that provides a sidelink signal between terminal devices in vehicle-to-everything (V2X), device-to-device (D2D), or the like. For example, cellular phones and automobiles communicate with each other using sidelink data. The cellular phone communicates with the smart home device without relaying communication signals through the base station.

The network device in the embodiments of the present disclosure may be a device configured to communicate with the terminal device, and the network device may also be referred to as an access network device or a radio access network device, for example, the network device may be a base station. The network device in the embodiments of the present disclosure may refer to a radio access network (RAN) node (or device) that accesses the terminal device to a wireless network. The base station may broadly cover various names in the following or be replaced with the following names. For example, a node B (NodeB), an evolved NodeB (eNB), a next generation NodeB (gNB), a relay station, a transmitting and receiving point (TRP), a transmitting point (TP), an access point (AP), a master station (MeNB), a secondary station (SeNB), a multistandard radio (MSR) node, a femtocell, a network controller, an access node, a wireless node, a transmission node, a transceiver node, a base band unit (BBU), a remote radio unit (RRU), an active antenna unit (AAU), a remote radio unit (RRH), a central unit (CU), a distributed unit (DU), a positioning node, and the like. The base station may be a macro base station, a micro base station, a relay node, a donor node or the like, or a combination thereof. The base station may also refer to a communication module, a modem, or a chip for being disposed in the foregoing device or apparatus. The base station may also be a mobile switching center and a device that plays a role of the base station In the D2D, V2X, and machine-to-machine (M2M) communication, a network side device in a 6G network, and a device that plays a role of the base station in a future communication system, etc. The base station supports networks of the same or different access technologies. The specific technology adopted by the network device and a specific form of the device in the embodiments of the present disclosure are not limited in the embodiments of the present disclosure.

The base station may be fixed or mobile. For example, a helicopter or drone may be configured to serve as a mobile base station, and one or more cells move according to the location of the mobile base station. In other examples, a helicopter or drone may be configured to serve as a device in communication with another base station.

In some deployments, the network device in the embodiments of the present disclosure may refer to the CU or the DU, or the network device includes the CU and the DU. The gNB may also include the AAU.

The network device and the terminal device may be deployed on land, including indoor or outdoor, handheld or vehicle-mounted, may be deployed on a water surface, and may also be deployed on an aircraft, a balloon, and a satellite in the air. A scenario in which the network device and the terminal device are located is not limited in the embodiments of the present disclosure.

It should be understood that all or part of functions of the communication device in the present disclosure may also be implemented by a software function running on hardware or implemented by a virtualization function instantiated on a platform (e.g., a cloud platform).

To facilitate understanding, some relevant technical knowledge related to the embodiments of the present disclosure has been described first. The following related technologies may be combined in any manner with the technical solutions of the present disclosure, and they all fall within the protection scope of the present disclosure. The embodiments of the present disclosure include at least part of the following content.

With the development of wireless communication technology, communication systems have increasingly higher demands for data transmission speed, connection quantity, and coverage. For example, the 5G mobile standard requires improvements based on higher data transmission speeds, larger connection quantities, and better coverage, aiming to provide tens of megabits per second data rates for each of thousands of users.

Certain wireless communication networks (e.g., 5G or subsequent technological evolutions) may support operations in very high or extra high frequency (EHF) bands. These frequency ranges (FR) with higher frequencies include millimeter wave (mmW) bands. Typically, these FRs correspond to wavelengths from 1 mm to 10 mm, or frequency ranges from 30 GHz to 300 GHz. For example, a frequency range corresponding to FR2 in 5G systems is 24.25 GHz to 52.6 GHz.

Communicating in these high-frequency FRs may support very high throughput. However, significant propagation loss at high frequencies is one of the challenges for wireless communication at these very high or extra high frequencies. For example, in the millimeter wave band, propagation loss may be quite severe.

To reduce propagation loss, beams may be sent using large-scale antenna arrays. A large number of densely distributed antenna elements increase the complexity and cost of digital beamforming, and communication devices typically perform beamforming in an analog domain based on large-scale antenna arrays. The beams generated by analog beamforming point in a specific direction at a given time. Communication devices transmit via beam sweeping. For example, the network device may transmit data to the terminal device by sweeping a collection of beams focused in different directions. For another example, the network device may achieve system coverage through beam sweeping. However, beam sweeping requires certain time-space resources and has relatively high power consumption. In other words, the generating and sweeping of the sweeping beam collection is costly in terms of power consumption, time, and space resources.

For communication between the network device and the terminal device, when the terminal device is within the coverage area of the network device, an optimal transmit and receive beam pair may be determined through beam pairing for uplink/downlink transmission. For example, in communications based on a Uu communication interface between the network device and the terminal device, a three-phase initial beam pairing process may be used for initial pairing. The three-phase initial pairing process includes processes P1, P2, and P3.

For a terminal device in a sidelink communication system, prior to beam pairing, the terminal device may not know whether any other devices are present in the vicinity or may be unclear in which transmission occasion different beam transmissions should be carried out, or may be uncertain about receive reference signals. Therefore, for the terminal device in the sidelink communication system, how to perform beam pairing based on the sidelink is a problem that needs to be addressed. For example, in FR2, how the sidelink establishes beam pairing to complete subsequent communications is one of the research topics of R18.

To analyze this issue, a brief explanation of communication modes of the sidelink is provided with reference to FIG. 1 and FIG. 2.

With the development of sidelink communication technology, application scenarios for sidelink communication are becoming increasingly diverse. For example, various V2X scenarios have been proposed in NR. These V2X scenarios include vehicle platooning, advanced driving, extended sensor, remote driving, and so on.

Sidelink communication technology may involve information interaction among various terminal devices. Taking a V2X communication system 200 shown in FIG. 2 as an example, vehicle-to-vehicle (V2V) communication occurs between a terminal device 201 and a terminal device 202, involving information interaction between the vehicles themselves. Vehicle-to-infrastructure (V2I) communication, vehicle-to-network (V2N) communication, and vehicle-to-pedestrian (V2P) communication occur between the terminal device 201 and terminal devices 203 to 205, respectively, all involving information interaction between vehicles and external systems.

The gradual expansion of the information interaction scope places higher demands on communication systems. For example, communication systems are required to support higher throughput, lower latency, higher reliability, larger coverage, and more flexible resource allocation. Taking the development of V2X as an example, in LTE-V2X, sidelink communication between terminal devices only supports a broadcast mode. In NR-V2X, sidelink communication between terminal devices may support three communication modes, i.e., broadcast, groupcast, and unicast.

Broadcast is the most basic communication mode in sidelink communication. For broadcast transmission, a terminal device for receiving sidelink data may be any terminal device around the terminal device as a sending end. For example, referring to FIG. 1, assume that the terminal device 125 acts as the sending end and sends sidelink data in a broadcast manner, then terminal devices 121 to 124 and terminal devices 126 to 129 located around the terminal device 125 may all act as receiving ends for that sidelink data.

Groupcast communication is used to support information interaction between terminal devices within a specific group (also referred to as a communication group) to assist in negotiations and decision-making among the terminal devices within the group. Sidelink groupcast is divided into two types of transmission. Type one is for managed groups, which have a stable connection relationship and clear ID information and information about the members within the group. Type two is for connectionless groups, which are formed without a connection, such as a distance-based dynamically built groupcast that requires explicit indication of the communication distance for the current service.

For groupcast transmission, terminal devices receiving the sidelink data may be all terminal devices within a communication group. Alternatively, the terminal devices receiving the sidelink data may be all terminal devices within a certain transmission distance. For example, referring to FIG. 1, for a communication group that includes terminal devices 127 to 129, when the terminal device 127 sends sidelink data in a groupcast manner, the other terminal devices 128 and 129 within that communication group are receiving terminals for the sidelink data. For another example, referring to FIG. 1, assume that terminal devices within a predefined range include terminal devices 127 to 129, when the terminal device 127 sends sidelink data in a groupcast manner, the other terminal devices 128 and 129 within the predefined range are also receiving terminals for the sidelink data.

Unicast communication may achieve sidelink communication between two terminal devices. Taking NR-V2X as an example, reliable communication from the terminal device to the terminal device may be achieved through radio resource control (RRC) signaling based on a newly defined PC5 interface.

The various transmission modes in sidelink communication have been introduced above. In sidelink communication based on beams, terminal devices may perform sidelink transmission with other terminal devices based on beams. For example, communication between two terminal devices may occur through transmit beams and receive beams. The following provides a brief introduction to beam communication between terminal devices in conjunction with FIG. 3.

Referring to FIG. 3, the terminal device 310 receives data through three receive beams, and the terminal device 320 sends data through three transmit beams. The three transmit beams are TX1, TX2, and TX3, and the three receive beams are RX1, RX2, and RX3.

As shown in FIG. 3, when terminal devices 310 and 320 communicate based on beams, they perform transmit beam sweeping and receive beam sweeping, respectively. As mentioned above, beam sweeping requires significant power consumption and expensive time-space resources. Therefore, in a sidelink communication system, terminal devices need to perform beam pairing based on the sidelink to establish relevant unicast or multicast links with other terminal devices. Whether establishing a unicast link or a groupcast or broadcast link, beam pairing cannot be executed solely by a terminal device at the receiving end or a terminal device at the sending end.

It was previously mentioned that terminal devices in a sidelink communication system may not be aware of other communication devices in the vicinity before performing beam pairing. If a terminal device establishes a transmission link based on beam pairing from communication requests, it may lead to inefficient resource utilization. Taking beam pairing based on direct communication requests (DCR) as an example, the terminal device typically uses PSSCH to send the DCR. The terminal device at the sending end may need to perform a plurality of times of transmit beam sweeping based on all beams used to send the DCR message to initiate the process of establishing a unicast link with an intended terminal device at the receiving end. If the terminal device at the sending end must perform a plurality of times of transmit beam sweeping, it requires a plurality of PSSCH transmissions to establish the unicast link, resulting in reduced utilization of time-frequency resources.

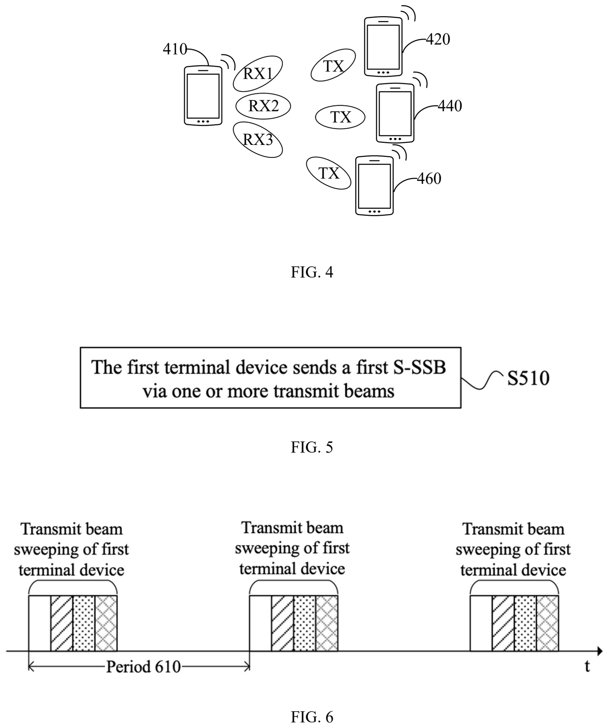

Additionally, during the beam pairing, the terminal device at the receiving end may face the issue of being unable to determine which terminal device the received beams come from. In other words, the terminal device cannot identify which terminal device each of the plurality of received beams comes from. For beam pairing, it is crucial for the receiving end to distinguish whether the plurality of received beams come from a single sending end or from a plurality of sending ends. If the terminal device cannot identify the source of the received beams, it cannot determine which beam is the best and, consequently, cannot perform beam pairing based on the received beams. To facilitate understanding, the following introduces the issue of terminal devices being unable to determine the corresponding sending ends of beams in the sidelink, with reference to FIG. 4. FIG. 4 is a schematic diagram of a receiving-end terminal device communicating with a plurality of sending-end terminal devices via beams.

Referring to FIG. 4, the terminal device 410 receives data through three receive beams, namely RX1, RX2, and RX3. The terminal devices at the sending end include three devices, namely a terminal device 420, a terminal device 440, and a terminal device 460. As shown in FIG. 4, the three terminal devices at the sending end may send the same signal through three transmit beams (TX). For example, all three terminal devices may transmit synchronization signals based on the same synchronization source. In this case, the terminal device 410 cannot identify the terminal devices at different sending ends. The terminal device 410 should send reported beams to the three terminal devices separately. However, the terminal device 410 may only send a reported beam to the terminal device 440 and not to terminal devices 420 and 460.

In summary, before establishing the sidelink, how terminal devices efficiently perform beam pairing to establish unicast or multicast links is a problem that needs to be addressed. To achieve efficient beam pairing, the following analysis delves into the above issues and related technologies taking the establishment of a unicast link as an example.

As previously mentioned, terminal devices do not have information about the presence of other terminal devices before beam pairing. If a terminal device establishes a unicast link directly based on a communication request, it may lead to inefficient resource utilization. Therefore, terminal devices may be configured to undergo an initial beam pairing process. Through the initial beam pairing, the terminal device may establish unicast links with other terminal devices. Without the initial beam pairing process occurring before the establishment of the unicast link, terminal devices may not be able to determine appropriate beam pairs for the required information exchange, thus failing to ensure basic communication coverage.

Furthermore, reference signals used for the initial beam pairing need to be configured or pre-configured. The relationship between reference signal transmission and beams also needs to be configured, and the beam pairing process cannot exchange information through other channels. Therefore, the transmission of reference signals from the sending terminal to the receiving terminal may be similar to the process of a random access channel (RACH). To perform the initial beam pairing, the reference signals for the initial beam pairing also need to be periodically transmitted using configured or pre-configured resources to achieve beam management.

To address some of the above issues, the present disclosure provides a method for sidelink communication. Through this method, terminal devices perform initial beam pairing based on a sidelink-synchronization signal block (S-SSB) to facilitate the establishment of unicast or multicast links using the paired beams. The following describes, taking the establishment of the unicast link as an example, the method for the terminal device to perform beam pairing based on the sidelink. The method may also be applied to multicast links such as groupcast or broadcast links.

The S-SSB is related information used for synchronization in the sidelink communication system. The synchronization signal block (SSB) may also represent a synchronization signal and physical broadcast channel (PBCH) block. For example, the sidelink synchronization signal in NR V2X mainly includes a sidelink-primary synchronization signal (S-PSS) block and a sidelink-secondary synchronization signal (S-SSS) block, which, combined with PSBCH, form the S-SSB in block format. An M sequence of length 127 may be used for S-PSS, and a Gold sequence of length 127 may be used for S-SSS. For example, the terminal device may use S-PSS for initial signal detection and synchronization acquisition. For example, the terminal device may use S-PSS and S-SSS to obtain detailed synchronization and detect a synchronization signal identity (ID).

During a beamforming process, a plurality of S-SSB transmissions may be supported within a S-SSB period. Furthermore, the terminal device may send S-SSB outside a resource pool with a period of 160 ms. Exemplarily, in R16, the number of S-SSBs that support repeated transmission within one S-SSB period is specified. To maintain flexibility of S-SSB configuration, the number of S-SSBs within one period is configurable, and specific configuration schemes for the number of S-SSBs within one period may be referenced in Table 1.

Table 1

| Frequency range | Subcarrier spacing/kHz | Number of S-SSBs within one period |
|---|---|---|
| FR1 | 15 | 1 |
| | 30 | 1,2 |
| | 60 | 1,2,4 |
| FR2 | 60 | 1,2,4,8,16,32 |
| | 120 | 1,2,4,8,16,32,64 |

As shown in Table 1, for FR2, a maximum of 64 S-SSBs may be transmitted within one period, thus it is required to indicate time domain resources occupied by a plurality of S-SSBs transmitted within that period. The S-SSB includes three types of signals or channels, i.e., S-PSS, S-SSS, and PSBCH, with a guard period (GP) placed at the last symbol of the timeslot where the S-SSB is located.

The above describes relevant technologies of S-SSB, which may be used for terminal devices to perform the initial beam pairing to reduce resource consumption when establishing direct links. Since terminal devices may have dedicated resource sets (pre)configured for S-SSB transmission, they do not need to dynamically allocate resources for transmitting S-SSB during the initial beam pairing, thus not affecting the beam pairing process.

As previously mentioned, during the initial beam pairing process, terminal devices may also encounter the issue of being unable to identify the terminal devices associated with the beams used for pairing. This issue may also arise when S-SSB is used for initial beam pairing.

On one hand, the S-SSB in related technologies typically only includes the sidelink synchronization signal ID, which is primarily used for synchronization purposes. The S-SSB does not include source ID information of the sending terminal device or ID information of a target terminal device, as the S-SSB may be sent from different terminal devices. The ID of the target terminal device may also be referred to as a target ID or destination ID. In the absence of source ID and target ID in the S-SSB, the terminal device at the receiving end cannot distinguish which terminal device sent the S-SSB, and other terminal devices may also read the information of the S-SSB, leading to resource confusion and ambiguity.

On the other hand, when a first terminal device sends a first S-SSB via different transmit beams, there may be other terminal devices in the vicinity of the first terminal device. These other terminal devices may include those related to communication with the first terminal device, as well as those unrelated to the communication with the first terminal device. Terminal devices that are unrelated to the communication with the first terminal device do not need to perform initial beam pairing. If these devices are identified to be unrelated to the first terminal device, they may be filtered out in subsequent communication processes, thereby reducing interference.

Based on the above analysis of S-SSB, the present disclosure provides a method for initial beam pairing based on S-SSB. It should be understood that the embodiments of the present disclosure are provided based on the above analysis, and thus the analysis should also be regarded as part of the present disclosure's contribution to the existing technology. To facilitate understanding, the following provides a detailed description of the method provided in the embodiments of the present disclosure with reference to FIG. 5.

Referring to FIG. 5, at operation S510, a first terminal device sends a first S-SSB through one or more transmit beams.

The first terminal device may be any terminal device that performs sidelink communication as described above. For example, the first terminal device may be a vehicle in V2X or a pedestrian in V2X. For another example, the first terminal device may be a sending terminal in the sidelink or a receiving terminal in the sidelink.

The first terminal device may be a communication device that needs to transmit data in sidelink communication. The first terminal device may perform unicast, groupcast, or broadcast communication with other terminal devices. In some embodiments, the first terminal device may be a group head terminal initiating groupcast or broadcast communication, or it may be a group member in groupcast or broadcast communication. For example, in V2X, the first terminal device may be a vehicle performing groupcast communication with other vehicles or other vehicles participating in that groupcast communication.

In some embodiments, the first terminal device may be located within a coverage area of the network or outside of the coverage area of the network. When within the coverage area of the network, the first terminal device may perform sidelink communication based on the configuration of the network device.

The first terminal device may be a communication device that supports an antenna array. In some embodiments, the first terminal device may perform analog beamforming based on the antenna array. For example, the first terminal device may generate transmit beams and send signals to other terminal devices through beam sweeping. The transmit beams may also be referred to as transmission beams. For another example, the first terminal device may generate receive beams and receive signals sent by other terminal devices through beam sweeping. In some embodiments, the first terminal device may perform wireless communication in high frequency or ultra-high frequency. For example, the first terminal device may communicate within a frequency range corresponding to FR2.

The first terminal device sending the first S-SSB through one or more transmit beams means that the first terminal device may generate a transmit beam carrying the first S-SSB at a specific time or generate a plurality of transmit beams carrying the first S-SSB at different times. The one or more transmit beams may be related to a beam sweeping period and a beam sweeping pattern of the first terminal device. For example, if the first terminal device is configured to perform a coarse scan of two beams in an initial stage, the number of a plurality of transmit beams may be two.

In some embodiments, the number of transmit beams may be used to determine a timeslot position of the S-SSB and synchronization signal bursts within a period. The number of transmit beams may be determined based on the capability of the first terminal device. For terminal devices with different capabilities, the numbers of transmit beams may also vary, thus requiring the number of beams to determine the number of S-SSB transmissions to ensure coverage in all directions of the beams. For example, the first terminal device may generate a maximum of 8 beams, then the number of the plurality of transmit beams may be less than or equal to 8.

In some embodiments, for a plurality of directional beams, the first terminal device may autonomously determine which beam to use on each (pre)configured resource. In other words, a mapping relationship between the plurality of transmit beams and resources may be configured by the first terminal device. For example, the plurality of transmit beams may respectively point in different directions. Therefore, the plurality of transmit beams may be a subset of beams focused in different directions generated by the first terminal device.

In some embodiments, the plurality of transmit beams of the first terminal device may be related to time units. For example, time indices of different S-SSBs may correspond to different sidelink beams. The first terminal device may send S-SSBs on different beams. The first terminal device may predefine or pre-configure this time mapping relationship. For example, when the first terminal device sends beams based on timeslots, the relationship between the transmit beams and timeslot index values may be used to determine an optimal transmit beam for the first terminal device. The relationship between the transmit beams and the timeslot index values refers to the mapping relationship between the transmit beams used by the first terminal device and corresponding timeslot indices. Therefore, the first terminal device may send S-SSBs to the terminal device at the receiving end in configured or pre-configured timeslots.

In some embodiments, the plurality of transmit beams may conduct periodic beam sweeping based on a transmission resource corresponding to the first S-SSB. For example, within a S-SSB period, when a plurality of S-SSBs are transmitted repeatedly, the plurality of transmit beams may conduct periodic beam sweeping based on the repetition period. To facilitate understanding, the following provides an exemplary illustration of the first terminal device performing periodic beam sweeping with reference to FIG. 6.

Referring to FIG. 6, along a time axis, the first terminal device performs transmit beam sweeping based on a time interval corresponding to period 610. Each transmit beam sweeping in FIG. 6 includes 4 transmit beams, which may point in 4 different directions. The four beams in different directions may be used for the repeated transmission of the first S-SSB.

In some embodiments, the timeslot position of the S-SSB and the number of synchronization signal bursts within a period need to be set based on the number of beams, the beam sweeping period, and the beam sweeping pattern. Based on varying capabilities of different UEs, the numbers of transmit beams may also differ, thus requiring the number of beams to determine the number of S-SSB transmissions to ensure coverage in all directions of the beams.

The first S-SSB may carry first information, and the first information may be used for one or more terminal devices other than the first terminal device to determine whether to perform initial beam pairing with the first terminal device. The one or more terminal devices other than the first terminal device may be any terminal device that receives the first S-SSB, such as a second terminal device. Through the initial beam pairing, it becomes easier to establish sidelink transmission links between terminal devices. Since this initial beam pairing is determined based on the first S-SSB, it may avoid the plurality of times of beam sweeping based on sending DCR messages or payloads mentioned above, instead sending DCR messages or payloads only on the paired beams, thereby improving resource utilization.

Beam pairing may also be referred to as beam alignment. To facilitate the terminal device in determining whether to perform beam pairing, the first information may be identification information of the terminal device or indication information regarding beam pairing. For example, the identification information of the terminal device may include identification information of the first terminal device and/or identification information of a target terminal device corresponding to one or more transmit beams. The subsequent description describes this in conjunction with the redesign of an information structure of the first S-SSB. For example, the first S-SSB may also carry indication information about beam pairing, such as a type or position of a terminal device that the first terminal device needs to perform beam pairing with.

In some embodiments, any terminal device other than the first terminal device may determine whether to establish a connection with the first terminal device based on the first information. If the connection is established, the initial beam pairing is performed. For example, when a terminal device receiving the first S-SSB determines from the first information that it is the target terminal device that the first terminal device needs to connect with, the terminal device may perform initial beam pairing with the first terminal device to establish a unicast link. For another example, when a terminal device receiving the first S-SSB determines from the first information that the first terminal device is the communication device it needs to connect with, the terminal device may establish a connection with the first terminal device and inform the first terminal device of specific information. For another example, when a terminal device receiving the first S-SSB does not belong to the target terminal device, the terminal device may not to perform initial beam pairing with the first terminal device. Furthermore, the terminal device may further shield the transmit beams of the first terminal device to reduce interference.

In some embodiments, a plurality of terminal devices other than the first terminal device may determine whether to establish a connection with the first terminal device based on the first information. When the first information is used for the first terminal device to perform initial beam pairing with the plurality of terminal devices, it may be used to establish unicast links individually or to establish the groupcast or broadcast link.

As shown in FIG. 5, the first information carried in the first S-SSB may be used for other terminal devices to determine whether to perform initial beam pairing with the first terminal device and establish the unicast link through the paired beams. By performing the initial beam pairing, the first terminal device may establish unicast links with other terminal devices that are farther away, thereby meeting more service requirements or higher-level commercial use case demands.

As previously mentioned, the first information may be used to address the issue of being unable to identify. When the first S-SSB carries the first information, it is necessary to resolve the information structure of the S-SSB so that other terminal devices performing initial beam pairing are able to identify the first terminal device from the S-SSB transmission of the first terminal device. The following specifically illustrates this with the example of the first information including identification information of the terminal device.

In some embodiments, the first S-SSB used for performing initial beam pairing may carry the first information that includes the identification information of the terminal device, facilitating the terminal device at the receiving end to determine whether to perform initial beam pairing. In other words, the first S-SSB carried by one or more transmit beams may be used to indicate the identification information of the relevant terminal device.

The identification information of the terminal device may be the identification information of the first terminal device or the identification information of the target terminal devices corresponding to one or more transmit beams sent by the first terminal device. The target terminal device refers to one or more terminal devices that the first terminal device needs to communicate with. In some embodiments, the target terminal device may include the second terminal device, meaning that the second terminal device may be any terminal device that the first terminal device needs to communicate with.

In some embodiments, the first information may include the identification information of the first terminal device, enabling the terminal device at the receiving end to determine a source terminal device of the beam. The terminal device at the receiving end may determine whether to perform beam pairing with the first terminal device based on information of the source terminal device.

In some embodiments, the first information may include the identification information of the target terminal device, allowing the terminal device at the receiving end to determine whether it belongs to the target terminal device. For the terminal device at the receiving end, it may determine whether the first terminal device wishes to perform beam pairing with it based on the first information, in order to establish a unicast link.

As a possible implementation, the first terminal device may have prior knowledge of the identification information of the target terminal device. For example, the DCR message may be broadcast or unicast. In the case of unicast DCR, an ID of the target terminal device (for unicast link establishment) is known in advance by the first terminal device.

As another possible implementation, the terminal device at the receiving end may determine target ID information of the first terminal device by detecting the S-PSS/S-SSS, and thereby determine whether the first terminal device needs to communicate with it. For example, if the receiving terminal detects an ID that belongs to itself, it needs to determine an optimal transmit beam sent by the first terminal device. Conversely, if the receiving terminal detects an ID information that does not belong to itself, it may abandon the beam pairing process.

As an embodiment, if the second terminal device determines that it belongs to the target terminal device based on the first information, the second terminal device may determine a first beam pair for establishing a unicast link with the first terminal device based on one or more transmit beams that send the first S-SSB. In the first beam pair, the transmit/receive beam corresponding to the first terminal device may correspond to one of the one or more transmit beams. Exemplarily, the first beam pair may be the optimal beam pair for establishing a sidelink between the first terminal device and the second terminal device.

In some embodiments, the first information may include the identification information of both the first terminal device and the target terminal device, enabling the terminal device receiving the transmit beam to determine whether it is relevant. For example, the first information may include a source ID and a target ID.

The identification information of the terminal device may be ID information of the terminal device, group ID information of the terminal device, or other information used to distinguish different terminal devices.

In some embodiments, the ID information of the first terminal device or the target terminal device may be associated with one or more of: a temporary mobile subscriber identity (TMSI) of the terminal device, sidelink control information (SCI) sent by the terminal device, and ID information determined based on an upper layer.

For example, the ID information of the terminal device may be proprietary ID information formed by each terminal device based on a temporary TSMI. This ID information may be used for terminal devices in the sidelink to determine which terminal device to communicate with.

For example, the ID information of the terminal device may be based on source ID/destination ID information in SCI format 2 in the sidelink. For example, SCI format 2 carries a 24-bit source ID and a 24-bit destination ID, helping the receiving terminal identify whether SCI format 2 is potentially related to the first terminal device.

For example, the ID information of the terminal device may be ID information generated by the first terminal device based on the upper layer, or ID information generated by the target terminal device based on the upper layer.

In some embodiments, the identification information of the terminal device may be indicated by a sidelink-synchronization signal identity (SL-SSID) or by an extended SL-SSID. Exemplarily, a parameter SL-SSID for NR-V2X synchronization priority has a total of 672 IDs, which is carried by S-PSS/S-SSS. The SL-SSID carried by S-PSS and S-SSS is used to identify a type of synchronization source and whether the terminal device is directly or indirectly connected to the synchronization source. In certain cases, the SL-SSID is not unique to each terminal device and cannot be used to distinguish different terminal devices, so the identification information of the terminal device may be indicated by the extended SL-SSID.

As a possible implementation, the extended SL-SSID may be used as specific information of the terminal device to distinguish different terminal devices. For example, the extended SL-SSID may be enhanced based on two parts, i.e., one part includes terminal device specific information indication, and the other part includes synchronization information indication. For synchronization information, it may be determined by reusing processes of related technologies. For terminal device specific information, it may be determined based on the source ID and/or target ID or generated based on ID information produced by the upper layer.

As previously mentioned, the S-SSB in related technologies does not include source ID and target ID information. To perform beam pairing based on the S-SSB, the information structure of the S-SSB may be redesigned, resources of the S-SSB may be reconfigured, or a PSBCH information field may be redesigned.

In some embodiments, the first S-SSB may include a PSBCH. The first information may be carried in the PSBCH. In this case, changes to the S-SSB information structure are minimal, allowing for better continuity with related technologies.

In some embodiments, the first S-SSB may not carry the PSBCH. That is to say, the first S-SSB may not include the PSBCH, thereby reducing the data carried by the S-SSB and lowering the resource requirements for performing initial beam pairing.

As a possible implementation, when the first S-SSB does not carry the PSBCH, the first S-SSB may serve as a dedicated S-SSB during the beam establishment process. For example, the first S-SSB may be a dedicated information block that only carries the first information. Alternatively, the first S-SSB may not carry the PSBCH during beam establishment, and the PSBCH information field may be added during the subsequent synchronization process.

In the case where the first S-SSB does not carry the PSBCH, in order to include the identification information of the terminal device in the S-SSB, it is required to generate a sequence of the identification information for transmission. This identification information may be generated via one or more of: a cyclic shift of an S-PSS sequence, a cyclic shift of an S-SSS sequence, or a dedicated sequence for the first information.

For example, when the identification information of the terminal device is the ID information of the terminal device, the source ID information and the target ID information may be generated based on separate sequences. That is to say, the first S-SSB may set a dedicated sequence for the first information to indicate the identification information to the terminal device at the receiving end.

For example, the identification information of the terminal device may be generated based on the cyclic shift of the S-PSS sequence or the S-SSS sequence. As mentioned above, the S-PSS is an M sequence of length 127, and the S-SSS is a Gold sequence of length 127. The identification information of the terminal device may be generated based on the processing of these sequences, such as cyclic shift processing.

For example, the identification information of the terminal device may also be composed of a combination of the S-PSS sequence and the S-SSS sequence.

In some embodiments, the first S-SSB may include an S-PSS and/or an S-SSS. For example, the first S-SSB may include the S-PSS/S-SSS or may include only the S-SSS, depending on the number of target IDs and/or the capability of the terminal device.

The transmission resources corresponding to the first S-SSB may be configured or pre-configured by the first terminal device, which may be referred to as a first configuration. The first terminal device may perform the first configuration based on the information structure of the first S-SSB. For example, when the first S-SSB does not carry the PSBCH, the first configuration may instruct the first S-SSB to perform independent periodic sending. This means that the first S-SSB may not be associated with sidelink data, media access control-control element (MAC-CE), etc. Alternatively, the first configuration may pre-configure a time domain resource for the first terminal device to send the first S-SSB.

In some embodiments, the first configuration may indicate time domain resources corresponding to the first S-SSB. Exemplarily, in the case where the first S-SSB does not carry the PSBCH, the time domain resources corresponding to the first S-SSB may include a first time domain resource and a second time domain resource, where the first time domain resource is used for sending S-PSS and/or S-SSS, and the second time domain resource is used for sending one or more of: a reference signal, automatic gain control (AGC), or a guard period (GAP). For example, when the first S-SSB is sent over a timeslot, if the S-SSB does not carry the PSBCH, remaining symbols after sending PSS and SSS may be used to send the GAP, the reference signal, or the AGC.

In some embodiments, the time domain resources corresponding to the first S-SSB may be one or more consecutive time units, or a plurality of time periods determined based on a first time interval, or dynamically indicated time periods. The time units may be timeslots or symbols, which is not limited herein.

Exemplarily, the time domain resources corresponding to the first S-SSB may be one or more consecutive timeslots. For example, a complete S-SSB signal may be sent in one timeslot. This S-SSB signal may only include S-PSS and S-SSS. Alternatively, the S-SSB may be sent over consecutive timeslots in the time domain.

Exemplarily, the time domain resources corresponding to the first S-SSB may be the plurality of time periods determined based on the first time interval. The first time interval may be one or more timeslots or one or more symbols. The plurality of time periods may be time periods separated within a time unit based on the first time interval, or time periods separated across a plurality of consecutive time units based on the first time interval. For example, the first S-SSB may be sent over timeslots separated by a certain time interval in the time domain. Alternatively, the first time interval may be one or two orthogonal frequency division multiplexing (OFDM) symbols, and the plurality of time periods for sending the first S-SSB may span only one or two symbols.

The redesigned information structure of the first S-SSB and the first information carried by the first S-SSB have been introduced above. Through this information, the terminal device at the receiving end may identify a sending terminal device and a receiving terminal device of the beam. If the terminal device at the receiving end identifies that it needs to perform beam pairing with the first terminal device, the terminal device should determine the optimal transmit beam of the first terminal device to establish the first beam pair.

In some embodiments, the first S-SSB may be sent through a plurality of transmit beams. If the target terminal device corresponding to the plurality of transmit beams includes the second terminal device, signal strength corresponding to the plurality of transmit beams may be used for the first terminal device and the second terminal device to determine the first beam pair. The first beam pair includes beams for sidelink communication between the first terminal device and the second terminal device.

As a possible implementation, the signal strength may include reference signal receiving power (RSRP), reference signal receiving quality (RSRQ), or other parameters that may reflect the quality of SSB transmission.

As a possible implementation, the first terminal device may configure a relationship between the transmit beams and the time unit index values, and the second terminal device may determine which transmit beam is based on the time it receives the transmit beam, thereby determining the optimal transmit beam of the first terminal device. Exemplarily, the second terminal device may perform measurements based on each transmitted S-SSB to obtain the RSRP values for each transmit beam of the first terminal device. For example, a beam with the highest measured RSRP is determined as a receive beam for the second terminal device, and a corresponding transmit beam is determined as a transmit beam for the first terminal device. The receive beam of the second terminal device and the transmit beam of the first terminal device forms the first beam pair for sidelink communication between the first and second terminal devices. Accordingly, a direction of the beam with the highest measured RSRP may also be used for the second terminal device to determine a transmit beam, and a direction of the corresponding transmit beam may be used for the first terminal device to determine a receive beam. The first beam pair also includes the transmit beam of the second terminal device and the receive beam of the first terminal device.

As an example, the second terminal device may set the number of beams that can be reported. The second terminal device may directly report RSRP values or report a difference between the RSRP of a certain beam and the RSRP of the strongest beam. For example, the second terminal device may report the strongest RSRP value based on the set number of beams or report several of stronger RSRP values. Alternatively, the second terminal device may report differences between the RSRP of remaining beams and the RSRP of the strongest beam.

The method for initial beam pairing between the first terminal device and the second terminal device based on S-SSB in the sidelink has been introduced above. The second terminal device may determine the optimal transmit beam based on a measurement result of the signal strength, thereby determining an optimal first beam pair. However, there may be potential resource conflicts with the sidelink communication resources occupied by the first beam pair.

To address this issue, the terminal device may sense the resources to determine whether conflicts exist. If the first terminal device determines that there are expected/potential resource conflicts with the resources occupied by the optimal first beam pair, it may select a suboptimal beam pair reported by the second terminal device to establish a connection or select other resources for the transmission of the first beam pair. For example, the second terminal device may report a plurality of measurement results for the strongest and second strongest RSRP. For the plurality of measurement results, the first terminal device may select a reasonable beam pair or resource based on the resource conflict condition to avoid potential resource conflicts.

In some embodiments, the first terminal device may request the target terminal device to perform resource sensing to determine whether resource conflicts exist. Exemplarily, the first terminal device may reduce potential resource conflicts by sending second information. The second information may instruct the target terminal device to perform resource sensing based on a received transmit beam and/or a receive beam corresponding to the received transmit beam. This resource sensing may be used to indicate whether a resource corresponding to the transmit/receive beams conflict with other resource demands, and whether the resource corresponding to the transmit/receive beams is preferred or non-preferred.

As an example, the second information may be one or more inter-UE coordination (IUC) requests based on the IUC mechanism to facilitate the exchange of preferred and non-preferred resources between terminal devices. However, the related IUC mechanism does not consider the directionality of transmit beams/receive beams/sensing. The related IUC requests also cannot indicate for which beam the IUC information is requested. Furthermore, legacy IUC information cannot indicate which beam the preferred/non-preferred resources in the IUC information are associated with. To resolve this issue, when the second information is an IUC request, it is required to include information in the IUC information to indicate the transmit/receive beams associated with the preferred/non-preferred resources. In this case, the second information may instruct the terminal device to perform resource sensing based on the association between the transmit/receive beams and the resources. For example, when the target terminal device performs resource sensing based on the transmit beam, the target terminal device may sense whether the resources corresponding to the transmit beam have configurations that have expected resource conflicts or could lead to potential resource conflicts.

In some embodiments, when the target terminal device includes the second terminal device, the second terminal device may perform resource sensing based on the second information and send a sensing result to the first terminal device. This sensing result may be used for the first terminal device to determine a beam pair or resource for sidelink communication with the second terminal device.

Exemplarily, the first terminal device and the second terminal device may determine a plurality of beam pairs based on the first S-SSB. Among the plurality of beam pairs, a first beam pair and a second beam pair may be determined based on the signal strength (e.g., RSRP). The first beam pair may be the optimal beam pair, and the second beam pair may be the suboptimal beam pair. If the sensing result from the second terminal device indicates that there is a resource conflict with a first resource associated with the first beam pair, the first terminal device may communicate with the second terminal device using the second beam pair.

For example, if the first terminal device receives a notification from the second terminal device indicating that the resources occupied by the optimal beam pair may have potential conflicts, the first terminal device may select the optimal resource occupied by a beam pair with second strongest RSRP to transmit.

Exemplarily, the first terminal device and the second terminal device may determine the first beam pair based on the first S-SSB and determine that resources of the first beam pair include a preferred first resource and a non-preferred second resource. If a sensing result from the second terminal device indicates that the first resource has a resource conflict, the first terminal device may transmit/receive beams using the non-preferred second resource.

In some embodiments, the first terminal device may also perform resource sensing and determine the beam pair or resource for communication with the target terminal device based on all or part of the sensing results.

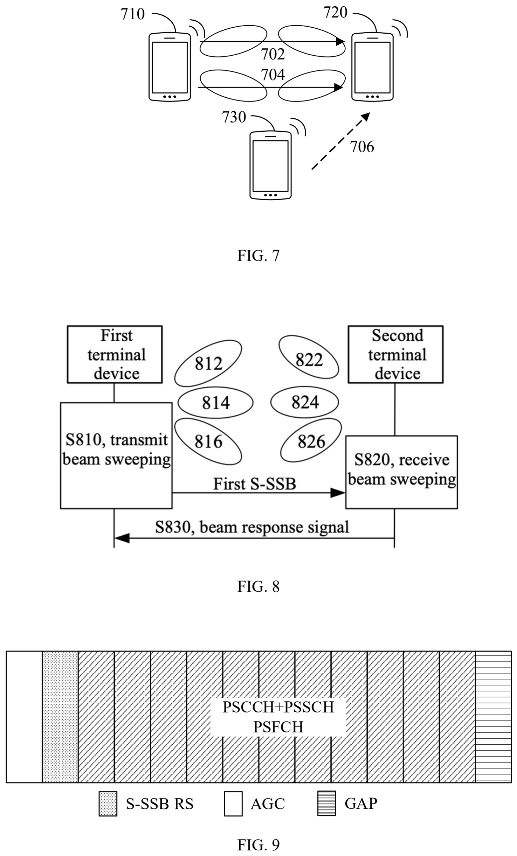

To facilitate understanding, the following illustrates, taking the unicast link as an example, the method for the terminal device to perform resource sensing shown in FIG. 7.

Referring to FIG. 7, a terminal device 710 and a terminal device 720 have a unicast link. The terminal device 710 may be regarded as the first terminal device, and the terminal device 720 may be regarded as the second terminal device. There are two candidate beam pairs for unicast communication between the two terminal devices, namely a beam pair 702 and a beam pair 704.

After the terminal device 720 receives an IUC request from the terminal device 710, it may notify the terminal device 710 of preferred/non-preferred resources. As shown in FIG. 7, the terminal device 720 has sensed a sidelink transmission 706 from a terminal device 730. This sidelink transmission 706 is sensed using the beam pair 704, rather than the beam pair 702. Based on the IUC request, the terminal device 720 may notify the terminal device 710 of preferred/non-preferred resources based on a sensing result of the beam pair 704 and/or expected or potential resource conflicts.

For the terminal device 710, if it finds that the resources occupied by the optimal beam pair have potential conflicts upon receiving the notification from the terminal device 720, it selects a suboptimal resource or a suboptimal beam pair for transmitting. As shown in FIG. 7, after the terminal device 720 senses a transmission from the terminal device 730 via the beam pair 704, it sends a sensing result to the terminal device 710. The terminal device 710 may then select the beam pair 702 for sidelink communication with the terminal device 720 based on the sensing result, even if the beam pair 704 is the optimal beam pair.

In certain cases, the first terminal device may find that both the optimal beam pair and the suboptimal beam pair have potential resource conflicts, which would severely impact the beam pairing between the first terminal device and the second terminal device. For example, in some service environments with many surrounding vehicles, a greater number of sensing operations are required, resulting in an increased number of detected resource conflicts. In this scenario, the first terminal device may find that the resources occupied by the optimal beam pair have potential conflicts after receiving the notification from the second terminal device, and that the alternative beam or the beam with second strongest signal strength (e.g., RSRP) also has potential conflicts, thereby affecting the beam pairing between the first terminal device and the second terminal device.

To address this issue, the second terminal device may determine services corresponding to the resources with potential conflicts based on the sensing situation. Furthermore, the second terminal device may determine whether to use these resources with potential conflicts based on the services corresponding to those resources.

In some embodiments, if the resources with potential conflicts correspond to services with higher priority, the second terminal device does not use those resources but reserves them for the higher-priority services. If the services corresponding to the resources with potential conflicts have lower priority than services of the second terminal device, the second terminal device prioritizes the use of those resources, meaning that those resources are not reserved for lower-priority services.

In some embodiments, if the resources with potential conflicts correspond to urgent or safety-related services, the second terminal device does not use those resources but reserves them for urgent or safety-related services.

As an embodiment, the second terminal device may report beam quality or beam strength to the first terminal device based on beam measurements and/or beam resource sensing results of a plurality of transmit beams. The first terminal device may select a beam for communication with the second terminal device based on the maximum value of the beam quality or beam strength of the plurality of beams. For example, the second terminal device may determine the beam quality or beam strength by measuring the signal carried by the beam. The beam quality or beam strength may be signal strength associated with the beam. Alternatively, when the second terminal device reports the measurement result to the first terminal device, the reported beam quality may be determined based on an actual measurement result of each transmit beam among the plurality of beams and conflict information corresponding to the resource of each transmit beam. In other words, the beam quality is determined based on the signal strength of each transmit beam and the conflict information corresponding to the resource of each transmit beam. The conflict information of the resource indicates whether the resource has an expected or potential demand for use, or whether the resource is currently occupied or will be occupied.

The following describes a method for determining the optimal beam for communication between the first terminal device and the second terminal device, using an example where the first terminal device sends the first S-SSB through M transmit beams and determines the optimal beam pair by measuring RSRP.

The M beams sent by the first terminal device are denoted as $BF_0$, $BF_1$, $BF_2$, ..., $BF_{M-1}$, meaning that $BF_i$ is an $i^{th}$ beam among the M beams sent by the first terminal device. The second terminal device measures the received transmit beams to obtain the signal strength, where the signal strength of the $i^{th}$ beam is $RSRP_{BFi}$, with i being a natural number from 0 to M-1.

When the second terminal device receives the IUC request from the first terminal device, the second terminal device may notify the first terminal device of preferred/non-preferred resources or the optimal and suboptimal beams corresponding to the two resources.

$Q_{ci}$ represents conflict information of the resource corresponding to $BF_i$ as sensed by the second terminal device. Here, $Q_{ci}=0$ indicates that the resource is unoccupied, while $Q_{ci}=1$ indicates that the resource is occupied or will be occupied.

When the second terminal device senses that the resource has potential conflicts, $Q_{ci}$ is set to 1 if the conflicts are with services of higher priority, urgent, or safety-related. If the priority of the service with the potential resource conflict is lower than that of the second terminal device's service, then $Q_{ci}$ is set to 0.

Based on the above settings, the beam quality reported by the second terminal device for each beam to the first terminal device is given by:

$$RSRP'_{BFi} = RSRP_{BFi} \times \prod_{j=0}^{K-1}(1 - Q_{cji});$$

where $Q_{cji}$ represents conflict information that is sensed by the second terminal device and is related to a $j^{th}$ terminal device in the K nearby terminal devices and a resource corresponding to the $i^{th}$ transmit beam, with j being a natural number from 0 to K-1. Compared to the service of the second terminal device, if a service of the $j^{th}$ terminal device has a higher priority, is more urgent, or is safety-related, $Q_{cji}=1$; and if the priority of the service of the $j^{th}$ terminal device is lower than that of the service of the second terminal device, $Q_{cji}=0$.

The second terminal device reports to the first terminal device based on $RSRP'_{BFi}$. The beam $RSRP'_{BF}$ selected by the first terminal device for pairing with the second terminal device satisfies:

$$RSRP'_{BF} = Max[RSRP'_{BFi}].$$

The above introduces the method for the second terminal device to determine the optimal beam for sidelink communication with the first terminal device based on the signal strength and resource conflict information. Furthermore, the second terminal device needs to provide feedback to the first terminal device regarding this information. To facilitate the signal reporting of the transmit beam from the second terminal device to the first terminal device, embodiments of the present disclosure further introduce a beam response signal, which may also be referred to as a beam feedback signal. Through the beam response signal, the second terminal device may notify the first terminal device of its presence and the selected S-SSB.

In some embodiments, the beam response signal used to send information to the first terminal device needs to (pre)define or (pre)configure a plurality of corresponding resources. For example, a mapping rule may be (pre)defined between resources used by the first terminal device to send the S-SSB and the resources used by the second terminal device for the beam response signal, allowing the first terminal device to determine the transmit beam selected by the second terminal device.

As a possible implementation, each resource corresponding to the beam response signal may be associated with/mapped to each resource of the S-SSB transmission from the first terminal device. In other words, the second terminal device may select resources associated with/mapped to the resources of the S-SSB transmission from the first terminal device to send the beam response signal to the first terminal device. Through the association/mapping of these resources, the first terminal device may identify a second terminal device that establishes the unicast link and a preferred transmit beam of the first terminal device selected by the second terminal device by detecting the beam response signal from the second terminal device. Exemplarily, the first terminal device may use different receive beams to monitor the beam response signal. These different receive beams may be derived from the plurality of transmit beams of the first terminal device. For example, the receive beams of the first terminal device may be derived from its transmit beams based on a corresponding relationship between transmit/receive beams.

As a possible implementation, the resources corresponding to the beam response signal may be used to configure sending occasions of the beam response signal. For example, the first terminal device may perform a second configuration based on a plurality of resources corresponding to a plurality of transmit beams. The second configuration may indicate a plurality of sending occasions in one-to-one correspondence with the plurality of resources. These sending occasions may be used for the second terminal device to send the beam response signal to the first terminal device. Since the plurality of sending occasions are in one-to-one correspondence with the plurality of transmit beams of the first terminal device, an occasion used by the second terminal device to send the beam response signal may indicate the selected transmit beam.

As an embodiment, the plurality of sending occasions may include a first sending occasion. If the first terminal device receives the beam response signal sent by the second terminal device at the first sending occasion, a transmit beam of the first terminal device corresponding to the first sending occasion may be used to determine the first beam pair for sidelink communication between the second terminal device and the first terminal device. In other words, the transmit beam corresponding to the first sending occasion is a preferred transmit beam determined by the second terminal device. For example, the second terminal device may select the optimal transmit beam based on the signal strength of the transmit beams and then send the beam response signal to the first terminal device according to the sending occasion corresponding to that transmit beam.

In some embodiments, the sending occasion corresponding to the beam response signal may also be used to send a beam report, and thus may also be referred to as a report beamforming occasion (RBO). For example, for the second terminal device, if a certain S-SSB is the optimal beam based on a L1-RSRP measurement result, a beam report may be sent at an RBO corresponding to this S-SSB after the second terminal device has sent all S-SSBs. The beam report may also be completed through the beam response signal.

To facilitate understanding, the following briefly introduces a possible implementation of the embodiments of the present disclosure in conjunction with FIG. 8. FIG. 8 is described from the perspective of the interaction between the first terminal device and the second terminal device, where the second terminal device is the target terminal device for the transmit beam of the first terminal device.

Referring to FIG. 8, at operation S810, the first terminal device performs transmit beam sweeping. The transmit beam sweeping is used to send the first S-SSB of the first terminal device. As shown in FIG. 8, the first terminal device performs the transmit beam sweeping using transmit beams 812, 814, and 816, where the transmit beam 812 corresponds to S-SSB1, the transmit beam 814 corresponds to S-SSB2, and the transmit beam 816 corresponds to S-SSB3.

At operation S820, the second terminal device performs receive beam sweeping. The receive beam sweeping may be used for the second terminal device to measure a plurality of transmit beams.

At operation S830, the second terminal device sends a beam response signal to the first terminal device. This beam response signal may be sent using one of beams 822, 824, and 826 shown in FIG. 8. The beam 822 corresponds to a report beamforming occasion RBO1, the beam 824 corresponds to a report beamforming occasion RBO2, and the beam 826 corresponds to a report beamforming occasion RBO3, where S-SSBs are in one-to-one mapping relationship with RBOs, with each S-SSB corresponding to one RBO. For example, S-SSB1 corresponds to RBO1, S-SSB2 corresponds to RBO2, S-SSB3 corresponds to RBO3, and so on.

As shown in FIG. 8, if the second terminal device sends the beam response signal through the beam 824 at operation S830, the first terminal device may receive a beam response report at RBO2. The first terminal device may identify a desired optimal transmit beam as the transmit beam 814. After the first terminal device and the second terminal device determine a transmit and receive beam pair based on this method, they may establish the unicast link based on an existing link establishment process.

In some embodiments, the beam response signal may indicate the presence of the second terminal device and the preferred beam based solely on the resources of the signal detection, and thus the beam response signal may not carry a payload. Exemplarily, the beam response signal may be similar to a physical random-access channel (PRACH) in Uu interface communication. Exemplarily, the beam response signal may be a reference signal, such as the beam response signal may be represented as S-SSB RS.

As a possible implementation, the beam response signal may be one of the following signals or information: a channel state information-reference signal (CSI-RS), a sounding reference signal (SRS), an acknowledgement (ACK) or negative acknowledgement (NACK), and a feedback signal corresponding to the first S-SSB. The feedback signal corresponding to the first S-SSB may be a feedback signal of the PSFCH dedicated to the S-SSB.

In some embodiments, the beam response signal sent by the second terminal device may indicate one or more of: identification information of the second terminal device, identification information of the first terminal device, an identity of the transmit beam and/or receive beam corresponding to the beam response signal, and associated information of the transmit beam and/or receive beam corresponding to the beam response signal with a time domain resource. The associated information of the transmit beam and/or receive beam with the time domain resource may include, for example, a mapping relationship between the transmit beam and/or receive beam and the timeslot index.

In some embodiments, the plurality of sending occasions for sending the beam response signal may be represented by symbols within the timeslot structure. For example, the time domain resource corresponding to each sending occasion among the plurality of sending occasions may include one or more of: a symbol corresponding to automatic gain control (AGC), one or more symbols adjacent to the AGC, and a time domain resource occupied by the PSFCH. The one or more symbols adjacent to the AGC may be proprietary symbols added after AGC. For example, within the timeslot structure, the second terminal device may use AGC symbols or proprietary symbol information added after AGC as the time domain resource for the beam response signal. Alternatively, the second terminal device may use the time domain resource occupied by the PSFCH to send the beam response signal.

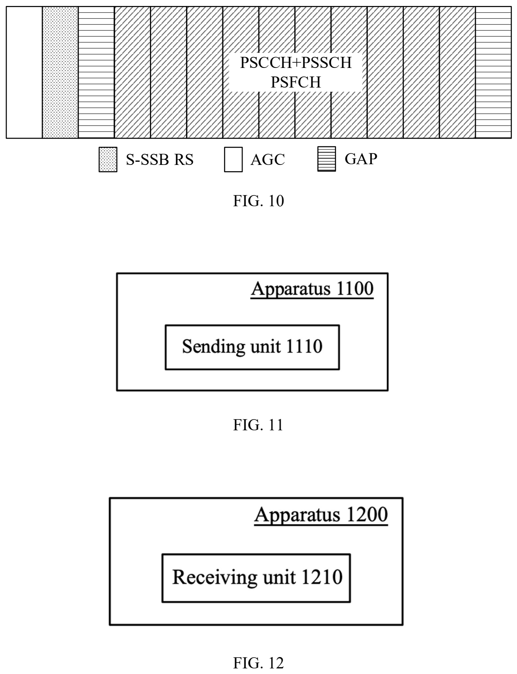

For ease of understanding, the following introduces two timeslot structures with beam response signals in conjunction with the schematic diagrams of the timeslot structures shown in FIG. 9 and FIG. 10. The beam response signal is the S-SSB RS.

Referring to FIG. 9 and FIG. 10, a first sidelink symbol within a timeslot may be used as an AGC symbol. The data on the AGC symbol is generally not used for data demodulation. The last symbol within a timeslot is a guard period (GAP) symbol. Symbols unrelated to the beam response signal are used for transmitting PSCCH/PSSCH/PSFCH.

In FIG. 9, the first sidelink symbol after the AGC symbol is used to send the beam response signal. In FIG. 10, the first sidelink symbol after the AGC symbol is used to send the beam response signal, and the second sidelink symbol is the GAP symbol related to the beam response signal.

The method embodiments of the present disclosure are described in detail above with reference to FIG. 1 to FIG. 10. Apparatus embodiments of the present disclosure are described in detail below with reference to FIG. 11 to FIG. 13. It should be understood that the descriptions of the apparatus embodiments correspond to the descriptions of the method embodiments, and therefore, reference may be made to the foregoing method embodiments for parts that are not described in detail.

FIG. 11 is a schematic block diagram of an apparatus for sidelink communication according to an embodiment of the present disclosure. The apparatus 1100 may be any first terminal device described above. The apparatus 1100 shown in FIG. 11 includes a sending unit 1110.

The sending unit 1110 is configured to send a first S-SSB through one or more transmit beams, where the first S-SSB is used to carry first information, and the first information is used for one or more terminal devices other than the first terminal device to determine whether to perform initial beam pairing with the first terminal device.

Optionally, the one or more terminal devices other than the first terminal device include a target terminal device corresponding to the transmit beams, and the first information includes identification information of the first terminal device and/or the target terminal device.

Optionally, the identification information of the first terminal device or the target terminal device is ID information, and the ID information is associated with one or more of: a temporary mobile subscriber identity of the first terminal device or the target terminal device; SCI sent by the first terminal device; and ID information determined by an upper layer corresponding to the first terminal device or the target terminal device.

Optionally, the identification information of the first terminal device or the target terminal device is indicated by an extended SL-SSID.

Optionally, the first S-SSB excludes a PSBCH, and the first information is generated via one or more of: a cyclic shift of an S-PSS sequence; a cyclic shift of an S-SSS sequence; and a dedicated sequence of the first information.

Optionally, the first S-SSB includes an S-PSS and/or an S-SSS, and time domain resources corresponding to the first S-SSB include a first time domain resource and a second time domain resource, the first time domain resource is used to send S-PSS and/or S-SSS, and the second time domain resource is used to send one or more of: a reference signal, AGC, and a GAP.

Optionally, the first S-SSB includes a PSBCH, and the first information is carried in the PSBCH.

Optionally, the apparatus 1100 further includes a first configuration unit, configured to perform a first configuration on a transmission resource corresponding to the first S-SSB, where the first configuration is used to indicate time domain resources corresponding to the first S-SSB.

Optionally, the time domain resources corresponding to the first S-SSB include one of: one or more consecutive time units; and a plurality of time periods determined based on a first time interval.

Optionally, the first S-SSB is sent through a plurality of transmit beams, a target terminal device corresponding to the plurality of transmit beams includes a second terminal device, the plurality of transmit beams are used for the second terminal device to determine beam quality or beam strength of each transmit beam in the plurality of transmit beams, and the beam quality or the beam strength is used for the first terminal device to determine a first beam pair, where the first beam pair is used for sidelink communication between the first terminal device and the second terminal device.

Optionally, the beam quality is determined according to the signal strength of each transmit beam and conflict information of a resource corresponding to each transmit beam, and the conflict information is used to indicate whether the second terminal device uses the resource corresponding to each transmit beam.

Optionally, the conflict information is determined according to a resource sensing result of the second terminal device. The sending unit 1110 is further configured to send second information to the second terminal device, where the second information is used to instruct the second terminal device to perform resource sensing based on a received transmit beam and/or a receive beam corresponding to the received transmit beam.

Optionally, the first S-SSB is sent through M transmit beams, the second terminal device senses K terminal devices based on the M transmit beams, and beam quality $RSRP'_{BFi}$ corresponding to an i^th transmit beam in the M transmit beams satisfies:

$$RSRP'_{BFi} = RSRP_{BFi} \times \prod_{j=0}^{K-1}(1 - Q_{cji});$$

where $RSRP_{BFi}$ represents signal strength of the i^th transmit beam, i is a natural number from 0 to M-1, $Q_{cji}$ represents conflict information related to a j^th terminal device in the K terminal devices and a resource corresponding to the i^th transmit beam, j is a natural number from 0 to K-1, $Q_{cji}=0$ represents that the second terminal device uses the resource corresponding to the i^th transmit beam, and $Q_{cji}=1$ represents that the second terminal device does not use the resource corresponding to the i^th transmit beam.

Optionally, the first S-SSB is sent through a plurality of transmit beams, a target terminal device corresponding to the plurality of transmit beams includes a second terminal device. The apparatus 1100 further includes a second configuration unit, configured to perform a second configuration based on a plurality of resources corresponding to the plurality of transmit beams, where the second configuration is used to indicate a plurality of sending occasions in one-to-one correspondence with the plurality of resources, and the plurality of sending occasions are used for the second terminal device to send a beam response signal to the first terminal device.

Optionally, the plurality of sending occasions include a first sending occasion. The apparatus 1100 further includes a receiving unit, configured to receive the beam response signal sent by the second terminal device at the first sending occasion, where a transmit beam of the first terminal device corresponding to the first sending occasion is used to determine a first beam pair for performing sidelink communication between the second terminal device and the first terminal device.

Optionally, a time domain resource corresponding to each sending occasion in the plurality of sending occasions includes one or more of: a symbol corresponding to AGC, one or more symbols adjacent to the AGC, and a time domain resource occupied by a PSFCH.

Optionally, the beam response signal sent by the second terminal device is used to indicate one or more of: identification information of the second terminal device; identification information of the first terminal device; an identity of a transmit beam and/or a receive beam corresponding to the beam response signal; and associated information of the transmit beam and/or receive beam corresponding to the beam response signal with a time domain resource.

Optionally, the beam response signal includes one of: CSI-RS, SRS, ACK/NACK, and a feedback signal corresponding to the first S-SSB.

FIG. 12 is another schematic block diagram of an apparatus for sidelink communication according to an embodiment of the present disclosure. The apparatus 1200 may be any second terminal device described above. The apparatus 1200 shown in FIG. 12 includes a receiving unit 1210.

The receiving unit 1210 is configured to receive a first sidelink-synchronization signal block (S-SSB) sent by a first terminal device through one or more transmit beams, where the first S-SSB is used to carry first information, and the first information is used for one or more terminal devices other than the first terminal device to determine whether to perform initial beam pairing with the first terminal device.

Optionally, the one or more terminal devices other than the first terminal device include a target terminal device corresponding to the one or more transmit beams, and the first information includes identification information of the first terminal device and/or the target terminal device.

Optionally, the identification information of the first terminal device or the target terminal device is ID information, and the ID information is associated with one or more of: a temporary mobile subscriber identity of the first terminal device or the target terminal device; SCI sent by the first terminal device; ID information determined by an upper layer corresponding to the first terminal device or the target terminal device.

Optionally, the identification information of the first terminal device or the target terminal device is indicated by an extended SL-SSID.

Optionally, the first S-SSB excludes a PSBCH, and the first information is generated via one or more of: a cyclic shift of an S-PSS sequence; a cyclic shift of an S-SSS sequence; and a dedicated sequence of the first information.

Optionally, the first S-SSB includes an S-PSS and/or an S-SSS, and time domain resources corresponding to the first S-SSB include a first time domain resource and a second time domain resource, the first time domain resource is used to send the S-PSS and/or the S-SSS, and the second time domain resource is used to send one or more of: a reference signal, an AGC, a GAP.

Optionally, the first S-SSB includes a PSBCH, and the first information is carried in the PSBCH.

Optionally, the first S-SSB is sent through a plurality of transmit beams, a target terminal device corresponding to the plurality of transmit beams includes the second terminal device, the plurality of transmit beams are used for the second terminal device to determine beam quality or a beam strength of each transmit beam in the plurality of transmit beams, and the beam quality or the beam strength is used for the first terminal device to determine a first beam pair, where the first beam pair is used for sidelink communication between the first terminal device and the second terminal device.

Optionally, the beam quality is determined based on the signal strength of each transmit beam and conflict information of a resource corresponding to each transmit beam, and the conflict information is used to indicate whether the second terminal device uses the resource corresponding to each transmit beam.

Optionally, the conflict information is determined according to a resource sensing result of the second terminal device. The receiving unit 1210 is further configured to receive second information sent by the first terminal device, where the second information is used to instruct the second terminal device to perform resource sensing based on a received transmit beam and/or a receive beam corresponding to the received transmit beam.

Optionally, the first S-SSB is sent through M transmit beams, the second terminal device senses K terminal devices based on the M transmit beams and beam quality $RSRP'_{BFi}$ corresponding to an $i^{th}$ transmit beam in the M transmit beams satisfies:

$$RSRP'_{BFi} = RSRP_{BFi} \times \prod_{j=0}^{K-1}(1 - Q_{cji});$$

where $RSRP_{BFi}$ represents signal strength of the $i^{th}$ transmit beam, i is a natural number from 0 to M-1, $Q_{cji}$ represents conflict information related to a $j^{th}$ terminal device in the K terminal devices and a resource corresponding to the $i^{th}$ transmit beam, j is a natural number from 0 to K-1, $Q_{cji}=0$ represents that the second terminal device uses the resource corresponding to the $i^{th}$ transmit beam, and $Q_{cji}=1$ represents that the second terminal device does not use the resource corresponding to the $i^{th}$ transmit beam.

Optionally, the first S-SSB is sent through a plurality of transmit beams, and a target terminal device corresponding to the plurality of transmit beams includes the second terminal device. The apparatus 1200 further includes a sending unit, configured to send a beam response signal to the first terminal device at a first sending occasion, where the first sending occasion is one of a plurality of sending occasions configured by the first terminal device, the plurality of sending occasions are in one-to-one correspondence with a plurality of resources corresponding to the plurality of transmit beams, and a transmit beam of the first terminal device corresponding to the first sending occasion is used to determine a first beam pair for performing sidelink communication between the second terminal device and the first terminal device.

Optionally, a time domain resource corresponding to each sending occasion in the plurality of sending occasions includes one or more of: a symbol corresponding to an AGC, one or more symbols adjacent to the AGC, and a time domain resource occupied by a PSFCH.

## EP 4 734 643 A1

Optionally, the beam response signal sent by the second terminal device is used to indicate one or more of: identification information of the second terminal device; identification information of the first terminal device; an identity of a transmit beam and/or a receive beam corresponding to the beam response signal; and associated information of the transmit beam and/or receive beam corresponding to the beam response signal with a time domain resource.

Optionally, the beam response signal includes one of: CSI-RS, SRS, ACK/NACK, and a feedback signal corresponding to the first S-SSB.

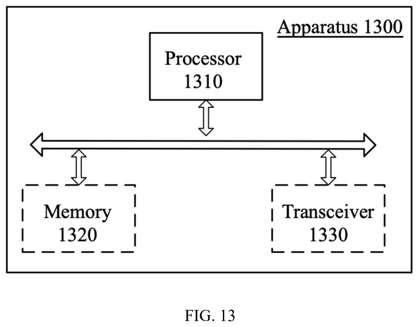

FIG. 13 is a schematic structural diagram of an apparatus for communication according to an embodiment of the present disclosure. The dashed line in FIG. 13 indicates that the unit or module is optional. The apparatus 1300 may be configured to implement the method described in the foregoing method embodiments. The apparatus 1300 may be a chip or a terminal device.

The apparatus 1300 may include one or more processors 1310, and the processor 1310 may support the apparatus 1300 to implement the method described in the foregoing method embodiments. The processor 1310 may be a general-purpose processor or a dedicated processor. For example, the processor may be a central processing unit (CPU). Alternatively, the processor may be another general-purpose processor, a digital signal processor (DSP), an application specific integrated circuit (ASIC), a field programmable gate array (FPGA) or other programmable logic devices, a discrete gate or transistor logic device, a discrete hardware component, or the like. The general-purpose processor may be a microprocessor, or the processor may be any conventional processor or the like.

The apparatus 1300 may further include one or more memories 1320 storing a program, and the program may be executed by the processor 1310 to cause the processor 1310 to perform the method described in the foregoing method embodiments. The memory 1320 may be independent of the processor 1310 or may be integrated into the processor 1310.

The apparatus 1300 may further include a transceiver 1330, and the processor 1310 may communicate with another device or chip via the transceiver 1330. For example, the processor 1310 may perform data transceiving with another device or chip via the transceiver 1330.

Embodiments of the present disclosure further provide a computer-readable storage medium, configured to store a program. The computer-readable storage medium may be applied to the terminal device or network device provided in the embodiments of the present disclosure, and the program causes the computer to perform the method performed by the terminal device or network device in the embodiments of the present disclosure.

The computer-readable storage medium may be any usable medium readable by a computer, or a data storage device, such as a server or a data center including one or more integrated usable media. The usable medium may be a magnetic medium (e.g., a floppy disk, a hard disk, or a magnetic tape), an optical medium (e.g., a digital video disk (DVD)), a semiconductor medium (e.g., a solid state disk (SSD)), or the like.

Embodiments of the present disclosure further provide a computer program product. The computer program product includes a program. The computer program product may be applied to the terminal device or network device provided in the embodiments of the present disclosure, and the program causes the computer to perform the method performed by the terminal or network device in the embodiments of the present disclosure.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, the procedures or functions according to the embodiments of the present disclosure are all or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium, for example, the computer instructions may be transmitted from a website, a computer, a server, or a data center to another website, computer, server, or data center in a wired (e.g., a coaxial cable, an optical fiber, a digital subscriber line (DSL)) or a wireless (e.g., infrared, wireless, microwave, etc.) manner.

Embodiments of the present disclosure further provide a computer program. The computer program may be applied to the terminal device or network device provided in the embodiments of the present disclosure, and the computer program causes the computer to perform the method performed by the terminal or network device in the embodiments of the present disclosure.

The terms "system" and "network" in the present disclosure may be used interchangeably. In addition, the terms used in the present disclosure are merely used to explain specific embodiments of the present disclosure and are not intended to limit the present disclosure. In the description, claims, and accompanying drawings of the present disclosure, the terms "first", "second", "third", "fourth", and the like are used to distinguish different objects rather than describe a specific order. In addition, the terms "including" and "having" and any variations thereof are intended to cover non-exclusive inclusion.

The term "indication" mentioned in the embodiments of the present disclosure may be a direct indication, or may be an indirect indication, or may indicate that there is an association relationship. For example, A indicates B, which may indicate that A directly indicates B, e.g., B is obtained through A, or may indicate that A indirectly indicates B, e.g., A indicates C and B is obtained through C, or may indicate that A and B have an association relationship.

The term "corresponding" may indicate that there is a direct correspondence or indirect correspondence between the two, or may indicate that there is an association relationship between the two, or may be relationships such as indicating and being indicated, configuring and being configured, etc.

In the embodiments of the present disclosure, the terms "predefined" or "preconfigured" may be implemented by pre-storing a corresponding code, a table, or another manner that may be used to indicate related information in a device (e.g., a terminal device and a network device), and a specific implementation is not limited in the present disclosure. For example, the predefined may indicate being defined in a protocol.

In the embodiments of the present disclosure, the term "protocol" in the embodiments of the present disclosure may refer to a standard protocol in the field of communications, such as an LTE protocol, an NR protocol, and related protocols applied to a future communication system, which is not limited in the present disclosure.

In the embodiments of the present disclosure, determining B based on A does not mean that B is determined only based on A, or B may also be determined based on A and/or other information.

In the embodiments of the present disclosure, the term "and/or" in this specification is merely an association relationship for describing associated objects, indicating that there are three relationships, e.g., A and/or B may indicate that A exists alone, A and B exist at the same time, and B exists alone. In addition, the character "/" in this specification generally indicates an "or" relationship between the associated objects.

In various embodiments of the present disclosure, a size of a serial number of each process does not mean an execution sequence, and the execution sequence of each process should be determined by its function and internal logic but should not constitute any limitation on an implementation process of the embodiments of the present disclosure.

In the several embodiments provided in the present disclosure, it should be understood that the disclosed system, apparatus, and method may be implemented in other manners. For example, the apparatus embodiments described above are merely illustrative, and the division of the units is merely a logical function division. In actual implementation, there may be alternative division manners, such as combining a plurality of units or components or integrating them into another system, or ignoring or not executing some features. In addition, the shown or discussed mutual coupling or direct coupling or communication connection may be indirect coupling or communication connection through some interfaces, devices, or units, which may be electrical, mechanical, or in other forms.

The units described as separate parts may or may not be physically separate, and parts shown as units may or may not be physical units, i.e., may be located in one position, or may be distributed on a plurality of network units. Some or all of the units may be selected according to actual needs to achieve the objectives of the solutions of the embodiments.

In addition, functional units in the embodiments of the present disclosure may be integrated into one processing unit, or each of the units may exist alone physically, or two or more units are integrated into one unit.

The foregoing descriptions are merely specific implementations of the present disclosure, but the protection scope of the present disclosure is not limited thereto, and any changes or substitutions may be easily conceived of by a person skilled in the art within the technical scope disclosed in the present disclosure. Therefore, the protection scope of the present disclosure shall be subject to the protection scope of the claims.

**Claims**

1. A method for sidelink communication, comprising:
   sending, by a first terminal device, a first sidelink-synchronization signal block, S-SSB, through one or more transmit beams, wherein the first S-SSB is used to carry first information, and the first information is used for one or more terminal devices other than the first terminal device to determine whether to perform initial beam pairing with the first terminal device.

2. The method according to claim 1, wherein the one or more terminal devices other than the first terminal device include a target terminal device corresponding to the one or more transmit beams, and the first information includes identification information of one or both of the first terminal device and the target terminal device.

3. The method according to claim 2, wherein the identification information of the first terminal device or the target terminal device is identity, ID, information, and the ID information is associated with one or more of:

   a temporary mobile subscriber identity of the first terminal device or the target terminal device;
   sidelink control information, SCI, sent by the first terminal device; and
   ID information determined by an upper layer corresponding to the first terminal device or the target terminal device.

4. The method according to claim 2, wherein the identification information of the first terminal device or the target terminal device is indicated by an extended sidelink-synchronization signal identity, SL-SSID.

5. The method according to any one of claims 1 to 4, wherein the first S-SSB excludes a physical sidelink broadcast channel, PSBCH, and the first information is generated via one or more of:

   a cyclic shift of a sidelink-primary synchronization signal, S-PSS, sequence;
   a cyclic shift of a sidelink-secondary synchronization signal, S-SSS, sequence; and
   a dedicated sequence of the first information.

6. The method according to claim 5, wherein the first S-SSB includes one or both of an S-PSS and an S-SSS, time domain resources corresponding to the first S-SSB include a first time domain resource and a second time domain resource, the first time domain resource is used to send one or both of the S-PSS and the S-SSS, and the second time domain resource is used to send one or more of: a reference signal, automatic gain control, AGC, and a guard period, GAP.

7. The method according to any one of claims 1 to 4, wherein the first S-SSB includes a PSBCH, and the first information is carried in the PSBCH.

8. The method according to any one of claims 1 to 7, further comprising:
   performing, by the first terminal device, a first configuration on a transmission resource corresponding to the first S-SSB, wherein the first configuration is used to indicate time domain resources corresponding to the first S-SSB.

9. The method according to claim 8, wherein the time domain resources corresponding to the first S-SSB include one of:

   one or more consecutive time units; and
   a plurality of time periods determined based on a first time interval.

10. The method according to any one of claims 1 to 9, wherein the first S-SSB is sent through a plurality of transmit beams, a target terminal device corresponding to the plurality of transmit beams includes a second terminal device, the plurality of transmit beams are used for the second terminal device to determine beam quality or beam strength of each transmit beam in the plurality of transmit beams, and the beam quality or the beam strength is used for the first terminal device to determine a first beam pair, wherein the first beam pair is used for sidelink communication between the first terminal device and the second terminal device.

11. The method according to claim 10, wherein the beam quality is determined according to the signal strength of each transmit beam and conflict information of a resource corresponding to each transmit beam, and the conflict information is used to indicate whether the second terminal device uses the resource corresponding to each transmit beam.

12. The method according to claim 11, wherein the conflict information is determined according to a resource sensing result of the second terminal device, and the method further includes:
   sending, by the first terminal device, second information to the second terminal device, wherein the second information is used to instruct the second terminal device to perform resource sensing based on one or both of a received transmit beam and a receive beam corresponding to the received transmit beam.

13. The method according to claim 11 or claim 12, wherein the first S-SSB is sent through M transmit beams, the second terminal device senses K terminal devices based on the M transmit beams, and beam quality $RSRP'_{BFi}$ corresponding to an i$^{th}$ transmit beam in the M transmit beams satisfies:

$$RSRP'_{BFi} = RSRP_{BFi} \times \prod_{j=0}^{K-1}(1 - Q_{cji});$$

wherein $RSRP_{BFi}$ represents signal strength of the i$^{th}$ transmit beam, i is a natural number from 0 to M-1, $Q_{cji}$ represents conflict information related to a j$^{th}$ terminal device in the K terminal devices and a resource corresponding to the i$^{th}$ transmit beam, j is a natural number from 0 to K-1, $Q_{cji}=0$ represents that the second terminal device uses the resource corresponding to the i$^{th}$ transmit beam, and $Q_{cji}=1$ represents that the second terminal device does not use the resource corresponding to the $i^{th}$ transmit beam.

14. The method according to any one of claims 1 to 13, wherein the first S-SSB is sent through a plurality of transmit beams, a target terminal device corresponding to the plurality of transmit beams includes a second terminal device, and the method further includes:

performing, by the first terminal device, a second configuration based on a plurality of resources corresponding to the plurality of transmit beams, wherein the second configuration is used to indicate a plurality of sending occasions in one-to-one correspondence with the plurality of resources, and the plurality of sending occasions are used for the second terminal device to send a beam response signal to the first terminal device.

15. The method according to claim 14, wherein the plurality of sending occasions include a first sending occasion, and the method further includes:

receiving, by the first terminal device, the beam response signal sent by the second terminal device at the first sending occasion, wherein a transmit beam of the first terminal device corresponding to the first sending occasion is used to determine a first beam pair for performing sidelink communication between the second terminal device and the first terminal device.

16. The method according to claim 14 or claim 15, wherein a time domain resource corresponding to each sending occasion in the plurality of sending occasions includes one or more of: a symbol corresponding to AGC, one or more symbols adjacent to the AGC, and a time domain resource occupied by a physical sidelink feedback channel, PSFCH.

17. The method according to any one of claims 14 to 16, wherein the beam response signal sent by the second terminal device is used to indicate one or more of:

identification information of the second terminal device;
identification information of the first terminal device;
an identity of one or both of a transmit beam and a receive beam corresponding to the beam response signal; and
associated information of one or both of the transmit beam and the receive beam corresponding to the beam response signal with a time domain resource.

18. The method according to any one of claims 14 to 17, wherein the beam response signal includes one of: a channel state information-reference signal, CSI-RS, a sounding reference signal, SRS, an acknowledgement, ACK, or negative acknowledgement, NACK, and a feedback signal corresponding to the first S-SSB.

19. A method for wireless communication, comprising:
receiving, by a second terminal device, a first sidelink-synchronization signal block, S-SSB, sent by a first terminal device through one or more transmit beams, wherein the first S-SSB is used to carry first information, and the first information is used for one or more terminal devices other than the first terminal device to determine whether to perform initial beam pairing with the first terminal device.

20. The method according to claim 17, wherein the one or more terminal devices other than the first terminal device include a target terminal device corresponding to the one or more transmit beams, and the first information includes identification information of one or both of the first terminal device and the target terminal device.

21. The method according to claim 20, wherein the identification information of the first terminal device or the target terminal device is identity, ID, information, and the ID information is associated with one or more of:

a temporary mobile subscriber identity of the first terminal device or the target terminal device;
sidelink control information, SCI, sent by the first terminal device; and
ID information determined by an upper layer corresponding to the first terminal device or the target terminal device.

22. The method according to claim 20, wherein the identification information of the first terminal device or the target terminal device is indicated by an extended sidelink-synchronization signal identity, SL-SSID.

23. The method according to any one of claims 19 to 22, wherein the first S-SSB excludes a physical sidelink broadcast channel, PSBCH, and the first information is generated via one or more of:

a cyclic shift of a sidelink-primary synchronization signal, S-PSS, sequence;
a cyclic shift of a sidelink-secondary synchronization signal, S-SSS, sequence; and
a dedicated sequence of the first information.

24. The method according to claim 23, wherein the first S-SSB includes one or both of an S-PSS and an S-SSS, time domain resources corresponding to the first S-SSB include a first time domain resource and a second time domain resource, the first time domain resource is used to send one or both of the S-PSS and the S-SSS, and the second time domain resource is used to send one or more of: a reference signal, automatic gain control, AGC, and a guard period, GAP.

25. The method according to any one of claims 19 to 22, wherein the first S-SSB includes a PSBCH, and the first information is carried in the PSBCH.

26. The method according to any one of claims 19 to 25, wherein the first S-SSB is sent through a plurality of transmit beams, a target terminal device corresponding to the plurality of transmit beams includes the second terminal device, the plurality of transmit beams are used for the second terminal device to determine beam quality or beam strength of each transmit beam in the plurality of transmit beams, and the beam quality or the beam strength is used for the first terminal device to determine a first beam pair, wherein the first beam pair is used for sidelink communication between the first terminal device and the second terminal device.

27. The method according to claim 26, wherein the beam quality is determined according to the signal strength of each transmit beam and conflict information of a resource corresponding to each transmit beam, and the conflict information is used to indicate whether the second terminal device uses the resource corresponding to each transmit beam.

28. The method according to claim 27, wherein the conflict information is determined according to a resource sensing result of the second terminal device, and the method further includes:
receiving, by the second terminal device, second information sent by the first terminal device, wherein the second information is used to instruct the second terminal device to perform resource sensing based on one or both of a received transmit beam and a receive beam corresponding to the received transmit beam.

29. The method according to claim 27 or claim 28, wherein the first S-SSB is sent through M transmit beams, the second terminal device senses K terminal devices based on the M transmit beams, and beam quality $RSRP'_{BFi}$ corresponding to an i$^{th}$ transmit beam in the M transmit beams satisfies:

$$RSRP'_{BFi} = RSRP_{BFi} \times \prod_{j=0}^{K-1}(1 - Q_{cji});$$

wherein $RSRP_{BFi}$ represents signal strength of the i$^{th}$ transmit beam, i is a natural number from 0 to M-1, $Q_{cji}$ represents conflict information related to a j$^{th}$ terminal device in the K terminal devices and a resource corresponding to the i$^{th}$ transmit beam, j is a natural number from 0 to K-1, $Q_{cji}=0$ represents that the second terminal device uses the resource corresponding to the i$^{th}$ transmit beam, and $Q_{cji}=1$ represents that the second terminal device does not use the resource corresponding to the i$^{th}$ transmit beam.

30. The method according to any one of claims 19 to 29, wherein the first S-SSB is sent through a plurality of transmit beams, a target terminal device corresponding to the plurality of transmit beams includes the second terminal device, and the method further includes:
sending, by the second terminal device, a beam response signal to the first terminal device at a first sending occasion, wherein the first sending occasion is one of a plurality of sending occasions configured by the first terminal device, the plurality of sending occasions are in one-to-one correspondence with a plurality of resources corresponding to the plurality of transmit beams, and a transmit beam of the first terminal device corresponding to the first sending occasion is used to determine a first beam pair for performing sidelink communication between the second terminal device and the first terminal device.

31. The method according to claim 30, wherein a time domain resource corresponding to each sending occasion in the plurality of sending occasions includes one or more of: a symbol corresponding to AGC, one or more symbols adjacent to the AGC, and a time domain resource occupied by a physical sidelink feedback channel, PSFCH.

**32.** The method according to claim 30 or claim 31, wherein the beam response signal sent by the second terminal device is used to indicate one or more of:

> identification information of the second terminal device;
> identification information of the first terminal device;
> an identity of one or both of a transmit beam and a receive beam corresponding to the beam response signal; and
> associated information of one or both of the transmit beam and the receive beam corresponding to the beam response signal with a time domain resource.

**33.** The method according to any one of claims 30 to 32, wherein the beam response signal includes one of: a channel state information-reference signal, CSI-RS, a sounding reference signal, SRS, an acknowledgement, ACK, or negative acknowledgement, NACK, and a feedback signal corresponding to the first S-SSB.

**34.** An apparatus for sidelink communication, wherein the apparatus is a first terminal device, and the first terminal device comprises:
a sending unit, configured to send a first sidelink-synchronization signal block, S-SSB, through one or more transmit beams, wherein the first S-SSB is used to carry first information, and the first information is used for one or more terminal devices other than the first terminal device to determine whether to perform initial beam pairing with the first terminal device.

**35.** The apparatus according to claim 34, wherein the one or more terminal devices other than the first terminal device include a target terminal device corresponding to the one or more transmit beams, and the first information includes identification information of one or both of the first terminal device and the target terminal device.

**36.** The apparatus according to claim 35, wherein the identification information of the first terminal device or the target terminal device is identity, ID, information, and the ID information is associated with one or more of:

> a temporary mobile subscriber identity of the first terminal device or the target terminal device;
> sidelink control information, SCI, sent by the first terminal device; and
> ID information determined by an upper layer corresponding to the first terminal device or the target terminal device.

**37.** The apparatus according to claim 35, wherein the identification information of the first terminal device or the target terminal device is indicated by an extended sidelink-synchronization signal identity, SL-SSID.

**38.** The apparatus according to any one of claims 34 to 37, wherein the first S-SSB excludes a physical sidelink broadcast channel, PSBCH, and the first information is generated via one or more of:

> a cyclic shift of a sidelink-primary synchronization signal, S-PSS, sequence;
> a cyclic shift of a sidelink-secondary synchronization signal, S-SSS, sequence; and
> a dedicated sequence of the first information.

**39.** The apparatus according to claim 38, wherein the first S-SSB includes one or both of an S-PSS and an S-SSS, time domain resources corresponding to the first S-SSB include a first time domain resource and a second time domain resource, the first time domain resource is used to send one or both of the S-PSS and the S-SSS, and the second time domain resource is used to send one or more of: a reference signal, automatic gain control, AGC, and a guard period, GAP.

**40.** The apparatus according to any one of claims 34 to 37, wherein the first S-SSB includes a PSBCH, and the first information is carried in the PSBCH.

**41.** The apparatus according to any one of claims 34 to 40, wherein the first terminal device further includes:
a first configuration unit, configured to perform a first configuration on a transmission resource corresponding to the first S-SSB, wherein the first configuration is used to indicate time domain resources corresponding to the first S-SSB.

**42.** The apparatus according to claim 41, wherein the time domain resources corresponding to the first S-SSB include one of:

one or more consecutive time units; and

a plurality of time periods determined based on a first time interval.

43. The apparatus according to any one of claims 34 to 42, wherein the first S-SSB is sent through a plurality of transmit beams, a target terminal device corresponding to the plurality of transmit beams includes a second terminal device, the plurality of transmit beams are used for the second terminal device to determine beam quality or beam strength of each transmit beam in the plurality of transmit beams, and the beam quality or the beam strength is used for the first terminal device to determine a first beam pair, wherein the first beam pair is used for sidelink communication between the first terminal device and the second terminal device.

44. The apparatus according to claim 43, wherein the beam quality is determined according to the signal strength of each transmit beam and conflict information of a resource corresponding to each transmit beam, and the conflict information is used to indicate whether the second terminal device uses the resource corresponding to each transmit beam.

45. The apparatus according to claim 44, wherein the conflict information is determined according to a resource sensing result of the second terminal device, and the sending unit is further configured to send second information to the second terminal device, wherein the second information is used to instruct the second terminal device to perform resource sensing based on one or both of a received transmit beam and a receive beam corresponding to the received transmit beam.

46. The apparatus according to claim 44 or claim 45, wherein the first S-SSB is sent through M transmit beams, the second terminal device senses K terminal devices based on the M transmit beams, and beam quality $RSRP'_{BFi}$ corresponding to an $i^{th}$ transmit beam in the M transmit beams satisfies:

$$RSRP'_{BFi} = RSRP_{BFi} \times \prod_{j=0}^{K-1}(1 - Q_{cji});$$

wherein $RSRP_{BFi}$ represents signal strength of the $i^{th}$ transmit beam, i is a natural number from 0 to M-1, $Q_{cji}$ represents conflict information related to a $j^{th}$ terminal device in the K terminal devices and a resource corresponding to the $i^{th}$ transmit beam, j is a natural number from 0 to K-1, $Q_{cji}$=0 represents that the second terminal device uses the resource corresponding to the $i^{th}$ transmit beam, and $Q_{cji}$=1 represents that the second terminal device does not use the resource corresponding to the $i^{th}$ transmit beam.

47. The apparatus according to any one of claims 34 to 46, wherein the first S-SSB is sent through a plurality of transmit beams, a target terminal device corresponding to the plurality of transmit beams includes a second terminal device, and the first terminal device further includes:

a second configuration unit, configured to perform a second configuration based on a plurality of resources corresponding to the plurality of transmit beams, wherein the second configuration is used to indicate a plurality of sending occasions in one-to-one correspondence with the plurality of resources, and the plurality of sending occasions are used for the second terminal device to send a beam response signal to the first terminal device.

48. The apparatus according to claim 47, wherein the plurality of sending occasions include a first sending occasion, and the first terminal device further includes:

a receiving unit, configured to receive the beam response signal sent by the second terminal device at the first sending occasion, wherein a transmit beam of the first terminal device corresponding to the first sending occasion is used to determine a first beam pair for performing sidelink communication between the second terminal device and the first terminal device.

49. The apparatus according to claim 47 or claim 48, wherein a time domain resource corresponding to each sending occasion in the plurality of sending occasions includes one or more of: a symbol corresponding to AGC, one or more symbols adjacent to the AGC, and a time domain resource occupied by a physical sidelink feedback channel, PSFCH.

50. The apparatus according to any one of claims 47 to 49, wherein the beam response signal sent by the second terminal device is used to indicate one or more of:

identification information of the second terminal device;

identification information of the first terminal device;
an identity of one or both of a transmit beam and a receive beam corresponding to the beam response signal; and
associated information of one or both of the transmit beam and the receive beam corresponding to the beam response signal with a time domain resource.

51. The apparatus according to any one of claims 47 to 50, wherein the beam response signal includes one of: a channel state information-reference signal, CSI-RS, a sounding reference signal, SRS, an acknowledgement, ACK, or negative acknowledgement, NACK, and a feedback signal corresponding to the first S-SSB.

52. An apparatus for wireless communication, wherein the apparatus is a second terminal device, and the second terminal device comprises:
a receiving unit, configured to receive a first sidelink-synchronization signal block, S-SSB, sent by a first terminal device through one or more transmit beams, wherein the first S-SSB is used to carry first information, and the first information is used for one or more terminal devices other than the first terminal device to determine whether to perform initial beam pairing with the first terminal device.

53. The apparatus according to claim 52, wherein the one or more terminal devices other than the first terminal device include a target terminal device corresponding to the one or more transmit beams, and the first information includes identification information of one or both of the first terminal device and the target terminal device.

54. The apparatus according to claim 53, wherein the identification information of the first terminal device or the target terminal device is identity, ID, information, and the ID information is associated with one or more of:

a temporary mobile subscriber identity of the first terminal device or the target terminal device;
sidelink control information, SCI, sent by the first terminal device; and
ID information determined by an upper layer corresponding to the first terminal device or the target terminal device.

55. The apparatus according to claim 53, wherein the identification information of the first terminal device or the target terminal device is indicated by an extended sidelink-synchronization signal identity, SL-SSID.

56. The apparatus according to any one of claims 52 to 55, wherein the first S-SSB excludes a physical sidelink broadcast channel, PSBCH, and the first information is generated via one or more of:

a cyclic shift of a sidelink-primary synchronization signal, S-PSS, sequence;
a cyclic shift of a sidelink-secondary synchronization signal, S-SSS, sequence; and
a dedicated sequence of the first information.

57. The apparatus according to claim 56, wherein the first S-SSB includes one or both of an S-PSS and an S-SSS, time domain resources corresponding to the first S-SSB include a first time domain resource and a second time domain resource, the first time domain resource is used to send one or both of the S-PSS and the S-SSS, and the second time domain resource is used to send one or more of: a reference signal, automatic gain control, AGC, and a guard period, GAP.

58. The apparatus according to any one of claims 52 to 55, wherein the first S-SSB includes a PSBCH, and the first information is carried in the PSBCH.

59. The apparatus according to any one of claims 52 to 58, wherein the first S-SSB is sent through a plurality of transmit beams, a target terminal device corresponding to the plurality of transmit beams includes the second terminal device, the plurality of transmit beams are used for the second terminal device to determine beam quality or beam strength of each transmit beam in the plurality of transmit beams, and the beam quality or the beam strength is used for the first terminal device to determine a first beam pair, wherein the first beam pair is used for sidelink communication between the first terminal device and the second terminal device.

60. The apparatus according to claim 59, wherein the beam quality is determined according to the signal strength of each transmit beam and conflict information of a resource corresponding to each transmit beam, and the conflict information is used to indicate whether the second terminal device uses the resource corresponding to each transmit beam.

**61.** The apparatus according to claim 60, wherein the conflict information is determined according to a resource sensing result of the second terminal device, and the receiving unit is further configured to receive second information sent by the first terminal device, wherein the second information is used to instruct the second terminal device to perform resource sensing based on one or both of a received transmit beam and a receive beam corresponding to the received transmit beam.

**62.** The apparatus according to claim 60 or claim 61, wherein the first S-SSB is sent through M transmit beams, the second terminal device senses K terminal devices based on the M transmit beams, and beam quality $RSRP'_{BFi}$ corresponding to an $i^{th}$ transmit beam in the M transmit beams satisfies:

$$RSRP'_{BFi} = RSRP_{BFi} \times \prod_{j=0}^{K-1}(1 - Q_{cji});$$

wherein $RSRP_{BFi}$ represents signal strength of the $i^{th}$ transmit beam, i is a natural number from 0 to M-1, $Q_{cji}$ represents conflict information related to a $j^{th}$ terminal device in the K terminal devices and a resource corresponding to the $i^{th}$ transmit beam, j is a natural number from 0 to K-1, $Q_{cji}$=0 represents that the second terminal device uses the resource corresponding to the $i^{th}$ transmit beam, and $Q_{cji}$=1 represents that the second terminal device does not use the resource corresponding to the $i^{th}$ transmit beam.

**63.** The apparatus according to any one of claims 52 to 62, wherein the first S-SSB is sent through a plurality of transmit beams, a target terminal device corresponding to the plurality of transmit beams includes the second terminal device, and the second terminal device further includes:
a sending unit, configured to send a beam response signal to the first terminal device at a first sending occasion, wherein the first sending occasion is one of a plurality of sending occasions configured by the first terminal device, the plurality of sending occasions are in one-to-one correspondence with a plurality of resources corresponding to the plurality of transmit beams, and a transmit beam of the first terminal device corresponding to the first sending occasion is used to determine a first beam pair for performing sidelink communication between the second terminal device and the first terminal device.

**64.** The apparatus according to claim 63, wherein a time domain resource corresponding to each sending occasion in the plurality of sending occasions includes one or more of: a symbol corresponding to AGC, one or more symbols adjacent to the AGC, and a time domain resource occupied by a physical sidelink feedback channel, PSFCH.

**65.** The apparatus according to claim 63 or claim 64, wherein the beam response signal sent by the second terminal device is used to indicate one or more of:

identification information of the second terminal device;
identification information of the first terminal device;
an identity of one or both of a transmit beam and a receive beam corresponding to the beam response signal; and
associated information of one or both of the transmit beam and the receive beam corresponding to the beam response signal with a time domain resource.

**66.** The apparatus according to any one of claims 63 to 65, wherein the beam response signal includes one of: a channel state information-reference signal, CSI-RS, a sounding reference signal, SRS, an acknowledgement, ACK, or negative acknowledgement, NACK, and a feedback signal corresponding to the first S-SSB.

**67.** An apparatus for communication, comprising a memory and a processor, wherein the memory is configured to store a program, and the processor is configured to invoke the program in the memory to perform the method according to any one of claims 1 to 33.

**68.** An apparatus, comprising a processor, wherein the processor is configured to invoke a program from a memory to perform the method according to any one of claims 1 to 33.

**69.** A chip, comprising a processor, wherein the processor is configured to invoke a program from a memory to cause a device on which the chip is installed to perform the method according to any one of claims 1 to 33.

**70.** A computer-readable storage medium storing a program, wherein the program causes a computer to perform the method according to any one of claims 1 to 33.

71. A computer program product, comprising a program that causes a computer to perform the method according to any one of claims 1 to 33.

72. A computer program, wherein the computer program causes a computer to perform the method according to any one of claims 1 to 33.

FIG. 1

FIG. 2

FIG. 3

FIG. 4

The first terminal device sends a first S-SSB
via one or more transmit beams — S510

FIG. 5

| Transmit beam sweeping of first terminal device | Transmit beam sweeping of first terminal device | Transmit beam sweeping of first terminal device |

Period 610

t

FIG. 6

EP 4 734 643 A1

FIG. 7

FIG. 8

PSCCH+PSSCH
PSFCH

S-SSB RS    AGC    GAP

FIG. 9

S-SSB RS    AGC    GAP

FIG. 10

FIG. 11

FIG. 12

FIG. 13

## INTERNATIONAL SEARCH REPORT

| International application No. |
|---|
| **PCT/CN2023/102489** |

| A. | CLASSIFICATION OF SUBJECT MATTER |
|---|---|

H04W72/25(2023.01)i

According to International Patent Classification (IPC) or to both national classification and IPC

| B. | FIELDS SEARCHED |
|---|---|

Minimum documentation searched (classification system followed by classification symbols)

IPC: H04W H04L

Documentation searched other than minimum documentation to the extent that such documents are included in the fields searched

Electronic data base consulted during the international search (name of data base and, where practicable, search terms used)

CNTXT, ENTXT, ENTXTC, VEN, 3GPP, CNKI, IEEE: 侧行, 侧链路, 旁链路, 波束, 配对, 对齐, 对准, 同步信号, 标识, 主同步信号, 辅同步信号, 质量, 强度, 冲突, 时机, sidelink, SL, beam+, align+, pair+, SSB, ID, PSS, SSS, quality, intensity, RSRP, RSRQ, collict+, clash+, occasion

| C. | DOCUMENTS CONSIDERED TO BE RELEVANT |
|---|---|

| Category* | Citation of document, with indication, where appropriate, of the relevant passages | Relevant to claim No. |
|---|---|---|
| X | APPLE. "Discussion on Sidelink Operation on FR2"<br>*3GPP TSG RAN WG1 #112bis-e, R1-2303487*, 07 April 2023 (2023-04-07),<br>sections 2-3 | 1-9, 19-25, 34-42, 52-58, 67-72 |
| X | HUAWEI et al. "Enhanced sidelink operation on FR2 licensed spectrum"<br>*3GPP TSG-RAN WG1 Meeting #112bis-e, R1-2302356*, 07 April 2023 (2023-04-07),<br>sections 2-5 | 1-9, 19-25, 34-42, 52-58, 67-72 |
| X | WILUS INC. "Discussion on enhanced sidelink operation on FR2 licensed spectrum"<br>*3GPP TSG RAN WG1 #112bis-e, R1-2303835*, 07 April 2023 (2023-04-07),<br>sections 2-3 | 1-9, 19-25, 34-42, 52-58, 67-72 |
| X | CMCC. "Discussion on sidelink enhancements on FR2 licensed spectrum"<br>*3GPP TSG RAN WG1 #112bis, R1-2303238*, 07 April 2023 (2023-04-07),<br>sections 2-4 | 1-9, 19-25, 34-42, 52-58, 67-72 |

| ☑ Further documents are listed in the continuation of Box C. | ☑ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **07 February 2024** | **23 February 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2023/102489** |

### C. DOCUMENTS CONSIDERED TO BE RELEVANT

| Category* | Citation of document, with indication, where appropriate, of the relevant passages | Relevant to claim No. |
| --- | --- | --- |
| A | CATT. "Discussion on enhanced sidelink operation on FR2 licensed spectrum" *3GPP TSG RAN WG1 #112bis-e, R1-2302707*, 07 April 2023 (2023-04-07), sections 2-8 | 1-72 |
| A | CN 112956251 A (LG ELECTRONICS INC.) 11 June 2021 (2021-06-11) entire document | 1-72 |
| A | CN 114402674 A (QUALCOMM INC.) 26 April 2022 (2022-04-26) entire document | 1-72 |
| A | US 2023199681 A1 (LG ELECTRONICS INC.) 22 June 2023 (2023-06-22) entire document | 1-72 |
| A | CN 115968046 A (VIVO COMMUNICATION TECHNOLOGY CO., LTD.) 14 April 2023 (2023-04-14) entire document | 1-72 |

Form PCT/ISA/210 (second sheet) (July 2022)

International application No.

**PCT/CN2023/102489**

| Patent document cited in search report | | | Publication date (day/month/year) | Patent family member(s) | | | Publication date (day/month/year) |
|---|---|---|---|---|---|---|---|
| CN | 112956251 | A | 11 June 2021 | WO | 2020091547 | A1 | 07 May 2020 |
| | | | | DE | 112019005501 | T5 | 23 September 2021 |
| | | | | US | 2021392592 | A1 | 16 December 2021 |
| CN | 114402674 | A | 26 April 2022 | EP | 4035280 | A1 | 03 August 2022 |
| | | | | WO | 2021061375 | A1 | 01 April 2021 |
| | | | | US | 2021092776 | A1 | 25 March 2021 |
| | | | | US | 11641675 | B2 | 02 May 2023 |
| | | | | IN | 202247007655 | A | 11 March 2022 |
| US | 2023199681 | A1 | 22 June 2023 | WO | 2021225393 | A1 | 11 November 2021 |
| | | | | KR | 20220164760 | A | 13 December 2022 |
| CN | 115968046 | A | 14 April 2023 | | None | | |

Form PCT/ISA/210 (patent family annex) (July 2022)